# FASCICULE DE BREVET EUROPEEN

(11) **EP 4 274 746 B1**
(45) Date de publication et mention de la délivrance du brevet: **14.08.2024**
(21) Numéro de dépôt: 22706067.0
(22) Date de dépôt: 03.01.2022
(51) Int. Cl.: B60C 9/00, B60C 9/18, B60C 9/22, B60C 9/20, B60C 11/03

(54) **PNEUMATIQUE COMPRENANT UNE COUCHE DE FRETTAGE A TRAME HYDROPHOBE ET A SOMMET D'ÉPAISSEUR RÉDUITE**
REIFEN MIT EINER VERSTÄRKUNGSLAGE MIT EINEM HYDROPHOBEN SCHUSS UND EINER REDUZIERTEN KRONENDICKE
TYRE COMPRISING A BRACING PLY HAVING A HYDROPHOBIC WEFT AND A REDUCED CROWN THICKNESS

(30) Priorité: 07.01.2021 FR 2100144
(43) Date de publication de la demande: 15.11.2023
(73) Titulaire: COMPAGNIE GENERALE DES ETABLISSEMENTS MICHELIN, 63000 Clermont-Ferrand (FR)
(72) Inventeur: DELBAST, Arnaud, 63040 Clermont-Ferrand Cedex 9 (FR); GALLARD, Laure, 63040 Clermont-Ferrand Cedex 9 (FR); BONNAMAIN, Pascal, 63040 Clermont-Ferrand Cedex 9 (FR)
(74) Mandataire: M.F.P. Michelin
(86) Numéro de dépôt international: PCT/FR2022/050002
(87) Numéro de publication internationale: WO 2022/148921

(56) Documents cités:
- FR-A1- 3 094 272
- JP-A- 2013 043 612
- KR-B1- 102 182 544
- US-A1- 2016 167 438

## Description

La présente invention concerne un pneumatique. Par pneumatique, on entend un bandage destiné à former une cavité en coopérant avec un élément de support, par exemple une jante, cette cavité étant apte à être pressurisée à une pression supérieure à la pression atmosphérique. Un pneumatique selon l'invention présente une structure de forme sensiblement toroïdale de révolution autour d'un axe principal du pneumatique.

On connait de l'état de la technique des pneumatiques pour véhicule de tourisme comprenant un sommet comprenant une bande de roulement ainsi qu'une armature de sommet. L'armature de sommet comprend de façon classique une armature de frettage et une armature de travail. L'armature de frettage est agencée radialement à l'extérieur de l'armature de travail et radialement à l'intérieur de la bande de roulement.

L'armature de travail comprend une couche de travail radialement intérieure et une couche de travail radialement extérieure agencée radialement à l'extérieure de la couche de travail radialement intérieure. Chaque couche de travail radialement intérieure et extérieure est délimitée axialement par deux bords axiaux de ladite couche de travail et comprend des éléments de renfort filaires de travail métalliques s'étendant axialement d'un bord axial à l'autre bord axial de ladite couche de travail les uns sensiblement parallèlement aux autres.

L'armature de frettage est délimitée axialement par deux bords axiaux et comprend une bandelette enroulée en hélice sur plusieurs tours circonférentiels de façon à s'étendre axialement entre les bords axiaux de l'armature de frettage. La bandelette comprend plusieurs éléments de renfort filaires de frettage textiles sensiblement parallèles les uns aux autres s'étendant selon une direction principale de frettage.

D'une part, on a noté que, malgré leurs excellentes performances, ces pneumatiques présentaient après un roulage dans des conditions très agressives et en présence d'agents corrosifs, des poches d'oxydation sur l'armature de travail, notamment sur la couche de travail radialement extérieure. De telles conditions très agressives sont notamment rencontrées lors du roulage des pneumatiques sur des chaussées caillouteuses. Les poches d'oxydation, si elles ne menacent pas la sécurité d'usage, peuvent générer des vibrations pour le conducteur du véhicule ce qui constitue une gêne de confort qu'il est désirable de supprimer.

D'autre part, afin de réduire la masse des pneumatiques ainsi que leur résistance au roulement et donc leur empreinte environnementale, on cherche à réduire la quantité des matériaux utilisés, notamment dans le sommet des pneumatiques. Néanmoins, en réduisant les quantités de matériaux utilisés dans le sommet, il est prévisible qu'on exposerait alors l'armature de frettage et l'armature de travail, à une pénétration accrue des agents corrosifs et donc à la formation plus rapide et en plus grand nombre des poches d'oxydation précédemment décrites. On obtiendrait alors, certes des pneumatiques allégés mais avec une gêne vibratoire amplifiée ce qui n'est pas souhaitable.

On connait des pneumatiques des documents JP2013043612, KR102182544, FR3094272 et US2016167438.

L'invention a pour but d'obtenir un pneumatique présentant un meilleur compromis entre la gêne vibratoire générée par les poches d'oxydation et la masse du pneumatique, et par conséquent, sa résistance au roulement.

A cet effet l'invention a pour objet un pneumatique comprenant un sommet comprenant une bande de roulement portant une surface de roulement, le sommet comprenant une partie axialement centrale s'étendant sur une largeur axiale égale à 50% de la largeur axiale de la surface de roulement et axialement centrée sur le plan médian du pneumatique, la partie axialement centrale de la bande de roulement comprenant au moins une découpure la plus profonde de la partie axialement centrale de la bande de roulement,
le sommet comprenant une armature de sommet comprenant :
   - une armature de travail comprenant au moins une couche de travail radialement la plus extérieure de l'armature de travail, la couche de travail radialement la plus extérieure comprenant des éléments de renfort filaires de travail métalliques,
   - une armature de frettage comprenant plusieurs éléments de renfort filaires de frettage textiles enroulés en hélice radialement autour de l'armature de travail et reliés les uns aux autres par un ou plusieurs élément(s) filaire(s) de trame, l'armature de frettage étant agencée radialement à l'extérieur de l'armature de travail et radialement à l'intérieur de la bande de roulement,
pneumatique dans lequel, dans la partie axialement centrale du sommet, la distance radiale moyenne E1 entre :
   - la surface passant par le point radialement le plus intérieur de la ou chaque découpure la plus profonde de la partie axialement centrale de la bande de roulement et sensiblement parallèle à la surface de roulement, et
   - la surface radialement extérieure passant par les points radialement les plus extérieurs des éléments de renfort filaires de frettage textiles les plus radialement extérieurs parmi les éléments de renfort filaires de frettage textiles,
est telle que E1 ≤ 2,00 mm, et
pneumatique dans lequel, le ou au moins un des élément(s) filaire(s) de trame comprend plusieurs monofilaments textiles et/ou plusieurs fibres textiles choisi(e)s parmi les monofilaments et les fibres synthétiques polymériques organiques, les monofilaments et les fibres synthétiques polymériques inorganiques et les assemblages de ces monofilaments et fibres.

Afin d'atteindre le but de l'invention, les inventeurs à l'origine de l'invention ont dû mettre en évidence le mécanisme conduisant à la formation des poches d'oxydation. Ainsi, les inventeurs ont observé que les conditions très agressives rencontrées lors du roulage du pneumatique sur des chaussées caillouteuses sont telles que les cailloux revêtant la chaussée forment des indenteurs agressant la bande de roulement du pneumatique et vont jusqu'à perforer cette dernière et atteindre l'armature de sommet. Une fois ces agressions subies par la bande de roulement, les agents corrosifs, notamment l'eau et le sel, pénètrent dans l'armature de sommet dans un premier temps par l'intermédiaire de l'armature de frettage. Au sein de l'armature de frettage des pneumatiques de l'état de la technique, on a observé que les agents corrosifs étaient, dans un deuxième temps, conduits dans l'armature de frettage non pas par les éléments de renfort filaires de frettage textiles mais par les éléments filaires de trame reliant les uns aux autres les éléments de renfort filaires de frettage textiles. Cette conduction des agents corrosifs est rendue possible par la nature même de ces éléments filaires de trame qui comprennent un assemblage comprenant des monofilaments en coton. L'utilisation du coton était, jusqu'à la découverte des inventeurs, guidée uniquement par le coût relativement faible du coton et par le fait que de tels éléments filaires de trame n'étaient utiles que lors du procédé de fabrication de l'armature de frettage décrit ci-dessous et n'avaient aucun effet sur la formation des poches d'oxydation.

En effet, dans les pneumatiques de l'état de la technique, de tels éléments filaires de trame sont sensiblement parallèles les uns aux autres selon une direction principale de trame non-colinéaire avec la direction principale de frettage. La direction principale de trame et la direction principale de frettage sont sensiblement perpendiculaires. De tels éléments filaires de trame sont utilisés lors du procédé de fabrication de la bandelette au cours duquel, lors d'une étape de fabrication d'un tissu de grande largeur, on agence sensiblement parallèlement les uns aux autres les éléments de renfort filaires de frettage textiles et on les relie entre eux par un ou plusieurs éléments filaires de trame, chaque élément filaire de trame s'étendant sur toute la largeur du tissu de grande largeur. Lors d'une étape ultérieure d'encollage, on revêt les éléments de renfort filaires de frettage textiles et les éléments filaires de trame d'une ou de plusieurs couches d'une ou de plusieurs compositions adhésives, puis on traite thermiquement le tissu de grande largeur précédemment obtenu de façon à obtenir un tissu de grand largeur encollé. Puis, lors d'une étape ultérieure de calandrage, on noie le tissu de grande largeur encollé dans une matrice élastomérique de façon à obtenir un tissu de grande largeur calandré. Ensuite, lors d'une étape de découpage, on découpe le tissu de grande largeur calandré de façon à obtenir plusieurs bandelettes de petite largeur dans lesquelles les éléments de renfort filaires de frettage textiles s'étendent selon une direction sensiblement parallèle à la direction de la plus grande longueur de la bandelette.

Ainsi, comme expliqué ci-dessus, jusqu'à la découverte des inventeurs, on pensait que les éléments filaires de trame avaient comme seule fonction de maintenir les éléments de renfort filaires de frettage textiles les uns par rapport aux autres lors des différentes étapes d'encollage, de calandrage et de découpage.

Une fois découvert le rôle essentiel des éléments filaires de trame dans la formation des poches d'oxydation dans les pneumatiques de l'état de la technique, les inventeurs ont donc proposé de supprimer le moyen de conduction formé par les éléments filaires de trame en coton et, conformément à l'invention, identifié que le ou les éléments filaires de trame comprenant aussi peu que possible de monofilaments et de fibres conducteurs des agents corrosifs permettaient de limiter la formation des poches d'oxydation. Ainsi, l'invention enseigne l'utilisation de monofilaments et/ou de fibres synthétiques organiques et/ou inorganiques qui, en raison de leur nature même, ne conduisent pas ou très peu l'eau et pas ou très peu les agents corrosifs et en tout cas, bien moins que le coton.

En effet, les monofilaments et/ou de fibres synthétiques organiques et/ou inorganiques présentent un taux de reprise d'humidité relativement faible. Ainsi, le ou au moins un des élément(s) filaire(s) de trame présente un taux de reprise d'humidité typiquement strictement inférieur à 5,0 %, de préférence inférieur ou égal à 3,0 % et encore plus préférentiellement inférieur ou égal à 2,0 %. Le taux de reprise d'humidité est mesuré conformément à la norme ASTM D 885/D 885MA de janvier 2010 (paragraphe 10) et est défini comme le rapport de la masse d'eau contenue dans l'élément filaire de trame sur la masse sèche de l'élément filaire de trame, exprimé en pourcentage et est égal à [(W - M)/M] x 100 où W est la masse, en grammes, de l'élément filaire de trame soumis à une température de 23°C±2°C sous 50%±10% d'humidité relative pendant 48H selon la norme ISO23529 :2016, et M est la masse, en grammes, de l'élément filaire de trame après séchage au four.

Conformément à l'invention, les éléments de renfort filaires de frettage textiles sont reliés les uns aux autres par un ou plusieurs élément(s) filaire(s) de trame. Ainsi, le ou les éléments filaires de trame sont entrelacés avec les éléments de renfort filaires de frettage textiles au contact des éléments de renfort filaires de frettage textiles de façon à maintenir chaque élément de renfort filaire de frettage textile à une distance donnée du ou des éléments de renfort filaires de frettage textiles qui lui est ou sont adjacents. L'entrelacement des éléments de renfort filaires de frettage textiles et du ou des élément(s) filaire(s) de trame définit une armure. Une armure bien connue est l'armure taffetas également appelée armure toile.

Les monofilaments et fibres textiles sont habituellement classifiés en deux catégories principales, les monofilaments et fibres naturels et les monofilaments et fibres chimiques. Les monofilaments et fibres naturels comprennent les monofilaments et fibres d'origine végétale (comprenant notamment le coton), d'origine animale et d'origine minérale. Les monofilaments et fibres chimiques comprennent les monofilaments et fibres artificiels et les monofilaments et fibres synthétiques. Les monofilaments et fibres artificiels sont fabriqués à partir de matière premières naturelles et comprennent notamment la viscose fabriquées à partir de cellulose de bois. Les monofilaments et fibres synthétiques comprennent les monofilaments et fibres polymériques organiques (par exemple les polyesters et les polyamides) ainsi que les monofilaments et fibres polymériques inorganiques (par exemple le verre et le carbone).

Ainsi, conformément à l'invention, on évitera autant que possible et de préférence totalement la présence des monofilaments naturels et des fibres naturelles ainsi que la présence des monofilaments artificiels et des fibres artificielles.

Chaque élément de renfort filaire de frettage est textile dans la mesure où il comprend, pour au moins 50% de sa masse, un ou plusieurs monofilaments textiles et/ou une ou plusieurs fibres textiles et de préférence est constitué d'un ou de plusieurs monofilaments textiles et/ou d'une ou de plusieurs fibres textiles.

Un monofilament est un élément filaire unitaire de très grande longueur et continu, généralement obtenu par filage d'une matière fondue. Une fibre est un élément filaire unitaire de courte longueur. Plusieurs fibres sont filées ensemble pour obtenir un fil continu. Ainsi, dans le cas où l'assemblage comprend des fibres synthétiques polymériques seules ou en combinaison avec des monofilaments synthétiques polymériques, l'assemblage comprend un ou plusieurs fil(s) continu(s), chaque fil continu étant formé par un filé (ou assemblage) de ces fibres synthétiques polymériques.

De façon à améliorer le compromis entre la gêne vibratoire générée par les poches d'oxydation et la masse du pneumatique et donc sa résistance au roulement, l'invention propose de profiter du ou des élément(s) filaire(s) de trame peu ou pas conducteur(s) des agents corrosifs pour réduire l'épaisseur du ou des matériaux séparant le fond de la découpure la plus profonde de la partie axialement centrale de la bande de roulement et les éléments de renfort filaires de frettage textiles de la partie axialement centrale de la bande de roulement. Cette épaisseur est représentée par la distance radiale moyenne E1. Ainsi, même si on augmente le risque de voir les agents corrosifs atteindre l'armature de frettage en réduisant la distance radiale moyenne E1, le fait d'empêcher la conduction des agents corrosifs par le ou les éléments filaires de trame permet de ne pas augmenter, voire de réduire la surface totale des poches d'oxydation.

Ainsi, dans un premier compromis amélioré par rapport à l'état de la technique, on pourra choisir de réduire fortement la distance radiale moyenne E1. On empêchera alors l'augmentation de la surface totale des poches d'oxydation sans nécessairement la réduire mais on allègera fortement le pneumatique et on réduira donc sa résistance au roulement. Dans un deuxième compromis amélioré par rapport à l'état de la technique, on pourra choisir de réduire modérément la distance radiale moyenne E1. On réduira alors la surface totale des poches d'oxydation et on allègera modérément le pneumatique et on réduira modérément sa résistance au roulement. Le choix du compromis sera choisi par l'homme du métier en fonction de l'usage auquel est destiné le pneumatique.

La détermination de la distance radiale moyenne E1 se fait sur la partie axialement centrale du sommet en mesurant, entre les surfaces, plusieurs distances radiales axialement réparties sur la largeur de la partie axialement centrale du sommet. On mesurera par exemple une distance tous les centimètres selon la direction axiale en partant d'un plan d'extrémité délimitant axialement la partie axialement centrale du sommet. Bien évidemment, si le point radialement le plus extérieur de l'élément de renfort filaire de frettage textile le plus radialement extérieur parmi les éléments de renfort filaires de frettage textiles est radialement à l'extérieur de la surface passant par le point radialement le plus intérieur de la ou chaque découpure la plus profonde de la partie axialement centrale de la bande de roulement et sensiblement parallèle à la surface de roulement, la distance radiale mesurée est considérée comme négative afin de prendre en compte la plus grande probabilité d'effet des agents corrosifs. A l'inverse, et dans la très grande majorité des cas, si le point radialement le plus extérieur de l'élément de renfort filaire de frettage textile le plus radialement extérieur parmi les éléments de renfort filaires de frettage textiles est radialement à l'intérieur de la surface passant par le point radialement le plus intérieur de la ou chaque découpure la plus profonde de la partie axialement centrale de la bande de roulement et sensiblement parallèle à la surface de roulement, la distance radiale mesurée est considérée comme positive.

On réalisera ces mesures dans plusieurs plans de coupe méridiens équirépartis sur la circonférence du pneumatique, par exemple dans quatre plans de coupe méridiens. On fera ensuite la moyenne des distances radiales ainsi mesurées afin d'obtenir la distance radiale moyenne E1.

Par distance radiale entre deux surfaces, on entend la distance droite entre un point d'une des surfaces et son projeté sur l'autre des surfaces selon la direction radiale du pneumatique.

La partie axialement centrale de la bande de roulement est la partie axiale de la bande de roulement de la partie axialement centrale du sommet. Ces parties axialement centrales du sommet et de la bande de roulement sont délimitées axialement par des mêmes premier et deuxième plans d'extrémité, chaque premier et deuxième plan d'extrémité étant perpendiculaire à la direction axiale du pneumatique et passant par des premier et deuxième points situés axialement à une distance axiale du plan médian du pneumatique égale à 25% de la largeur de la surface de roulement.

De façon classique, on détermine la surface de roulement sur un pneumatique monté sur une jante de mesure et gonflé à la pression nominale (250 kPa ou 290kPa selon qu'il s'agit d'un pneumatique standard ou renforcé) au sens du manuel de la norme ETRTO (« European Tyre and Rim Technical Organisation »), 2020. Dans le cas d'une frontière évidente entre la surface de roulement et le reste du pneumatique, la largeur axiale de la surface de roulement est simplement mesurée. Dans le cas où la surface de roulement est continue avec les surfaces externes des flancs du pneumatique, la limite axiale de la surface de roulement passe par le point pour lequel l'angle entre la tangente à la surface de roulement et une droite parallèle à la direction axiale passant par ce point est égal à 30°. Lorsqu'il existe sur un plan de coupe méridienne, plusieurs points pour lesquels ledit angle est égal en valeur absolue à 30°, on retient le point radialement le plus à l'extérieur.

Optionnellement et préférentiellement, le pneumatique selon l'invention est pour un véhicule sélectionné parmi les véhicules de tourisme, les véhicules commerciaux légers et les camping-cars et encore plus préférentiellement le pneumatique selon l'invention est pour un véhicule de tourisme.

Un pneumatique pour véhicule de tourisme est un pneumatique tourisme ou pour voiture particulière tel que défini au sens du manuel de la norme ETRTO, 2020. Un tel pneumatique présente une section dans un plan de coupe méridien caractérisée par une hauteur de section H et une largeur de section nominale SW au sens du manuel de la norme ETRTO, 2020. De façon plus préférée et optionnelle, les pneumatiques pour véhicule de tourisme auxquels on appliquera avantageusement l'invention sont tels que le rapport H/S, exprimé en pourcentage, est au plus égal à 90, de préférence au plus égal à 80 et plus préférentiellement au plus égal à 70 et est au moins égal à 20, de préférence au moins égal à 30, et la largeur de section nominale SW est au moins égale à 115 mm, de préférence au moins égale à 155 mm et plus préférentiellement au moins égale à 175 mm et au plus égal à 385 mm, de préférence au plus égal à 315 mm, plus préférentiellement au plus égal à 285 mm. En outre le diamètre au crochet D, définissant le diamètre de la jante de montage du pneumatique, est au moins égal à 12 pouces, de préférence au moins égal à 16 pouces et au plus égal à 24 pouces, de préférence au plus égal à 21 pouces. La largeur de section nominale SW, le rapport d'aspect nominal H/S ainsi que le diamètre au crochet D sont ceux du marquage de la dimension inscrite sur le flanc du pneumatique et conformes au manuel de la norme ETRTO 2020.

Un pneumatique pour véhicule commercial léger ou camping-car est tel que défini au sens du manuel de la norme ETRTO dans les sections 10 à 12 de la partie relative aux pneumatiques pour véhicules commerciaux.

La profondeur d'une découpure est, sur un pneumatique neuf, la distance radiale maximale entre le fond de la découpure et son projeté sur le sol lors du roulage du pneumatique. La valeur maximale des profondeurs des découpures est nommée hauteur de sculpture. Dans la plupart des pneumatiques, la découpure la plus profonde de la partie axialement centrale de la bande de roulement est également la découpure la plus profonde de la bande de roulement et donc définit la hauteur de sculpture.

Une découpure désigne soit une rainure, soit une incision et forme un espace débouchant sur la surface de roulement.

Une incision ou une rainure présente, sur la surface de roulement, deux dimensions principales caractéristiques : une largeur et une longueur curviligne telles que la longueur curviligne est au moins égale à deux fois la largeur. Une incision ou une rainure est donc délimitée par au moins deux faces latérales principales déterminant sa longueur curviligne et reliées par une face de fond, les deux faces latérales principales étant distantes l'une de l'autre d'une distance non nulle, dite largeur de la découpure.

La largeur d'une découpure est, sur un pneumatique neuf, la distance maximale entre les deux faces latérales principales mesurée, dans le cas où la découpure ne comprend pas de chanfrein, à une cote radiale confondue avec la surface de roulement, et dans le cas où la découpure comprend un chanfrein, à la cote radiale la plus radialement extérieure de la découpure et radialement intérieure au chanfrein. La largeur est mesurée sensiblement perpendiculairement aux faces latérales principales.

La largeur axiale d'une découpure est, quant à elle, mesurée selon la direction axiale du pneumatique, par exemple dans un plan de coupe méridien du pneumatique.

Une incision est telle que la distance entre les faces latérales principales est appropriée pour permettre la mise en contact au moins partielle des faces latérales principales délimitant ladite incision lors du passage dans l'aire de contact, notamment lorsque le pneumatique est à l'état neuf et dans des conditions usuelles de roulage, comprenant notamment le fait que le pneumatique soit à charge nominale et à pression nominale.

Une rainure est telle que la distance entre les faces latérales principales est telle que ces faces latérales principales ne peuvent venir en contact l'une contre l'autre dans des conditions usuelles de roulage, comprenant notamment le fait que le pneumatique soit à charge nominale et à pression nominale.

Une découpure peut être transversale ou circonférentielle.

Une découpure transversale est telle que la découpure s'étend selon une direction moyenne formant un angle strictement supérieur à 30°, de préférence supérieur ou égal à 45° avec la direction circonférentielle du pneumatique. La direction moyenne est la courbe la plus courte joignant les deux extrémités de la découpure et parallèle à la surface de roulement. Une découpure transversale peut être continue, c'est-à-dire ne pas être interrompue par un bloc de sculpture ou une autre découpure de sorte que les deux faces latérales principales déterminant sa longueur sont ininterrompues sur la longueur de la découpure transversale. Une découpure transversale peut également être discontinue, c'est-à-dire interrompue par un ou plusieurs blocs de sculpture et/ou une ou plusieurs découpures de sorte que les deux faces latérales principales déterminant sa longueur sont interrompues par un ou plusieurs blocs de sculpture et/ou une ou plusieurs découpures.

Une découpure circonférentielle est telle que la découpure s'étend selon une direction moyenne formant un angle inférieur ou égal à 30°, de préférence inférieur ou égal à 10° avec la direction circonférentielle du pneumatique. La direction moyenne est la courbe la plus courte joignant les deux extrémités de la découpure et parallèle à la surface de roulement. Dans le cas d'une découpure circonférentielle continue, les deux extrémités sont confondues l'une avec l'autre et sont jointes par une courbe faisant un tour complet du pneumatique. Une découpure circonférentielle peut être continue, c'est-à-dire ne pas être interrompue par un bloc de sculpture ou une autre découpure de sorte que les deux faces latérales principales déterminant sa longueur sont ininterrompues sur l'ensemble d'un tour du pneumatique. Une découpure circonférentielle peut également être discontinue, c'est-à-dire interrompue par un ou plusieurs blocs de sculpture et/ou une ou plusieurs découpures de sorte que les deux faces latérales principales déterminant sa longueur sont interrompues par un ou plusieurs blocs de sculpture et/ou une ou plusieurs découpures sur l'ensemble d'un tour du pneumatique.

Dans le cas d'une découpure circonférentielle située hors du plan médian du pneumatique, les faces latérales sont appelées faces axialement intérieure et face axialement extérieure, la face axialement intérieure étant agencée, à un azimut donné, axialement à l'intérieur de la face axialement extérieure par rapport au plan médian.

Chaque découpure circonférentielle comprend des extrémités axiales axialement intérieure et extérieure. Que ce soit dans le cas d'une découpure circonférentielle dépourvue de chanfrein ou pourvue de chanfrein, chaque extrémité axialement intérieure et extérieure est située respectivement sur chaque bord axialement intérieur ou extérieur.

Dans le cas d'une découpure transversale, les faces latérales sont appelées face d'attaque et face de fuite, la face d'attaque étant celle dont le bord, pour une ligne circonférentielle donnée, entre dans l'aire de contact avant le bord de la face de fuite.

Dans des modes de réalisation, la ou chaque découpure circonférentielle, qu'elle soit principale ou non, est munie de chanfreins. Un chanfrein d'une découpure circonférentielle peut être un chanfrein droit ou un chanfrein arrondi. Un chanfrein droit est formé par une face plane inclinée par rapport à la face axialement intérieure et extérieure qu'elle prolonge jusqu'au bord axialement intérieur ou extérieur délimitant axialement la découpure circonférentielle. Un chanfrein arrondi est formé par une face courbe se raccordant tangentiellement à la face axialement intérieure ou extérieure qu'elle prolonge. Un chanfrein d'une découpure circonférentielle est caractérisé par une hauteur et une largeur égale respectivement à la distance radiale et à la distance axiale entre le point commun entre la face axialement intérieure ou extérieure prolongée par le chanfrein et le bord axialement intérieur ou extérieur délimitant axialement la découpure circonférentielle.

Dans des modes de réalisation, la ou chaque découpure transversale est munie de chanfreins. En d'autres termes, chaque découpure transversale étant délimitée radialement par des faces d'attaque et de fuite délimitant circonférentiellement ladite découpure transversale et reliées entre elles par une face de fond délimitant radialement vers l'intérieur ladite découpure transversale. Un chanfrein d'une découpure transversale peut être un chanfrein droit ou un chanfrein arrondi. Un chanfrein droit est formé par une face plane inclinée par rapport à la face d'attaque ou de fuite qu'elle prolonge jusqu'au bord d'attaque ou de fuite délimitant circonférentiellement la découpure transversale. Un chanfrein arrondi est formé par une face courbe se raccordant tangentiellement à la face d'attaque ou de fuite qu'elle prolonge. Un chanfrein d'une découpure transversale est caractérisé par une hauteur et une largeur égale respectivement à la distance radiale et à la distance selon une direction perpendiculaire aux faces d'attaque ou de fuite entre le point commun entre la face d'attaque ou de fuite prolongée par le chanfrein et le bord d'attaque ou de fuite délimitant circonférentiellement la découpure transversale.

Le pneumatique selon l'invention présente une forme sensiblement torique autour d'un axe de révolution sensiblement confondu avec l'axe de rotation du pneumatique. Cet axe de révolution définit trois directions classiquement utilisées par l'homme du métier : une direction axiale, une direction circonférentielle et une direction radiale.

Par direction axiale, on entend la direction sensiblement parallèle à l'axe de révolution du pneumatique ou de l'ensemble monté, c'est-à-dire l'axe de rotation du pneumatique ou de l'ensemble monté.

Par direction circonférentielle, on entend la direction qui est sensiblement perpendiculaire à la fois à la direction axiale et à un rayon du pneumatique ou de l'ensemble monté (en d'autres termes, tangente à un cercle dont le centre est sur l'axe de rotation du pneumatique ou de l'ensemble monté).

Par direction radiale, on entend la direction selon un rayon du pneumatique ou de l'ensemble monté, c'est-à-dire une direction quelconque coupant l'axe de rotation du pneumatique ou de l'ensemble monté et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial du sommet.

Par plan circonférentiel équatorial du pneumatique, on entend, dans un plan de coupe méridien, le plan passant par l'équateur du pneumatique, perpendiculaire au plan médian et à la direction radiale. L'équateur du pneumatique est, dans un plan de coupe méridien (plan perpendiculaire à la direction circonférentielle et parallèle aux directions radiale et axiales) l'axe parallèle à l'axe de rotation du pneumatique et située à équidistance entre le point radialement le plus extérieur de la bande de roulement destiné à être au contact avec le sol et le point radialement le plus intérieur du pneumatique destiné à être en contact avec un support, par exemple une jante.

Par plan méridien, on entend un plan parallèle à et contenant l'axe de rotation du pneumatique ou de l'ensemble monté et perpendiculaire à la direction circonférentielle.

Par radialement intérieur, respectivement radialement extérieur, on entend plus proche de l'axe de rotation du pneumatique, respectivement plus éloigné de l'axe de rotation du pneumatique. Par axialement intérieur, respectivement axialement extérieur, on entend plus proche du plan médian du pneumatique, respectivement plus éloigné du plan médian du pneumatique.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Par couche de carcasse ou de travail, on entend une couche comprenant des éléments de renfort filaires continus d'un bord à l'autre de la couche de carcasse ou de travail. Ainsi, une couche de carcasse ou de travail peut être retournée dans le pneumatique de façon à former une épaisseur double de ladite couche de carcasse ou de travail. Deux couches de carcasse ou de travail différentes comprennent des éléments de renfort filaires discontinus d'une couche à l'autre. Deux couches de carcasse ou de travail superposées forment une épaisseur égale à la somme des épaisseurs des deux couches de carcasse ou de travail.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les caractéristiques des éléments de renfort filaire de frettage textiles ainsi que du ou des éléments filaires de trame peuvent être déterminées en extrayant ces éléments du pneumatique, par exemple selon un procédé conforme à la norme ASTM D885/D885M - 10a - paragraphe 6.4.

Sauf mention explicite contraire, les caractéristiques géométriques du pneumatique sont réalisées sur un pneumatique non chargé et non gonflé ou sur une coupe de pneumatique dans un plan méridien lorsque cela est possible.

De façon optionnelle et préférentielle, au moins 50%, de préférence au moins 75% et encore plus préférentiellement 100% de la masse du ou de chaque élément filaire de trame est constituée par les monofilaments textiles et/ou fibres textiles choisi(e)s parmi les monofilaments et les fibres synthétiques polymériques organiques, les monofilaments et les fibres synthétiques polymériques inorganiques et les assemblages de ces monofilaments et fibres. En d'autres termes, lorsque 100% de la masse du ou de chaque élément filaire de trame est constituée par les monofilaments textiles et/ou fibres textiles choisi(e)s parmi les monofilaments et les fibres synthétiques polymériques organiques, les monofilaments et les fibres synthétiques polymériques inorganiques et les assemblages de ces monofilaments et fibres, le ou chaque élément filaire de trame est constitué par les monofilaments textiles et/ou fibres textiles choisi(e)s parmi les monofilaments et les fibres synthétiques polymériques organiques, les monofilaments et les fibres synthétiques polymériques inorganiques et les assemblages de ces monofilaments et fibres. Dans ce cas, le ou chaque élément filaire de trame est dépourvu de monofilament naturels, de fibres naturelles, de monofilament artificiel et de fibres artificielles.

En maximisant la proportion massique des monofilaments et/ou des fibres non conducteurs des agents corrosifs dans le ou chaque élément filaire de trame, on réduit le risque de conduire les agents corrosifs.

La proportion de la masse des monofilaments et des fibres considérés est déterminée en mesurant la masse de l'élément filaire de trame puis en séparant les monofilaments et les fibres considérés et en en mesurant la masse. Le rapport des deux masses est égal à la proportion de masse recherchée.

De façon optionnelle et avantageuse, au moins 50%, de préférence au moins 75% et encore plus préférentiellement 100% de la longueur cumulée du ou des élément(s) filaire(s) de trame comprend plusieurs monofilaments textiles et/ou fibres textiles choisi(e)s parmi les monofilaments et les fibres synthétiques polymériques organiques, les monofilaments et les fibres textiles synthétiques polymériques inorganiques et les assemblages de ces monofilaments et fibres. En maximisant la longueur d'éléments filaires de trame non conducteurs des agents corrosifs, on réduit le risque de conduire les agents corrosifs.

La proportion de longueur cumulée du ou des élément(s) filaire(s) de trame considérée est déterminée sur une portion représentative du pneumatique et si nécessaire sur la totalité du pneumatique en mesurant la longueur cumulée du ou des élément(s) filaire(s) de trame et en mesurant la longueur cumulée du ou des élément(s) filaire(s) de trame considérés. Le rapport des deux longueurs cumulées est égal à la proportion de longueur cumulée recherchée.

Dans des modes de réalisation optionnels permettant de maximiser l'allègement du pneumatique, E1 ≤ 1,80 mm, de préférence E1 ≤ 1,50 mm, plus préférentiellement E1 ≤ 1,40 mm et encore plus préférentiellement E1 ≤ 1,20 mm.

De façon optionnelle, E1 ≥ 0,20 mm, de préférence E1 ≥ 0,50 mm et plus préférentiellement E1 ≥ 1,00 mm. La présence d'une épaisseur de matériau(x) non nulle permet de protéger les éléments de renfort filaires de frettage textiles d'un trop grand nombre d'agressions et d'une pénétration trop importante des agents corrosifs dans l'armature de sommet.

De façon optionnelle et avantageuse, le ou au moins un des élément(s) filaire(s) de trame comprend plusieurs monofilaments et/ou fibres textiles synthétiques polymériques organiques. De tels monofilaments et fibres sont particulièrement peu chers.

De façon optionnelle et préférentielle, au moins 50%, de préférence au moins 75% et encore plus préférentiellement 100% de la masse du ou de chaque élément filaire de trame est constituée par les monofilaments textiles et/ou fibres textiles choisi(e)s parmi les monofilaments et les fibres synthétiques polymériques organiques. En d'autres termes, lorsque 100% de la masse du ou de chaque élément filaire de trame est constituée par les monofilaments textiles et/ou fibres textiles choisi(e)s parmi les monofilaments et les fibres synthétiques polymériques organiques, le ou chaque élément filaire de trame est constitué par les monofilaments textiles et/ou fibres textiles choisi(e)s parmi les monofilaments et les fibres synthétiques polymériques organiques. Dans ce cas, le ou chaque élément filaire de trame est dépourvu de monofilament naturels, de fibres naturelles, de monofilament artificiel et de fibres artificielles. La proportion de masse est déterminée comme décrit précédemment.

De façon optionnelle et avantageuse, au moins 50%, de préférence au moins 75% et encore plus préférentiellement 100% de la longueur cumulée du ou des élément(s) filaire(s) de trame comprend plusieurs monofilaments et/ou fibres synthétiques polymériques organiques. La proportion de longueur cumulée est déterminée comme décrit précédemment.

Dans un mode de réalisation optionnels et avantageux, les monofilaments et les fibres synthétiques polymériques organiques sont choisi(e)s parmi les monofilaments et les fibres de polyester, les monofilaments et les fibres de polyamide, les monofilaments et les fibres de polycétone, les monofilaments et les fibres de polyuréthane, les monofilaments et les fibres d'acrylique, les monofilaments et les fibres de polyoléfine, les monofilaments et les fibres de polyétheréthercétone et les assemblages de ces monofilaments et de ces fibres, de préférence parmi les monofilaments et les fibres de polyester, les monofilaments et les fibres de polyamide et les assemblages de ces monofilaments et de ces fibres et plus préférentiellement les monofilaments et les fibres synthétiques organiques sont des monofilaments et des fibres de polyester. Parmi les polyesters, on choisira préférentiellement le PET (poly(téréphtalate d'éthylène), le PEN (poly(naphtalate d'éthylène) et le PEF (polyéthylène 2,5-furandicarboxylate) et plus particulièrement le PET. Parmi les polyamides, on choisira préférentiellement les polyamides aliphatiques et les polyamides aromatiques, et plus particulièrement les polyamides aliphatiques.

Dans certains modes de réalisation optionnels et préférés, dans la partie axialement centrale du sommet, la distance radiale moyenne E2 entre :
- la surface radialement intérieure passant par les points radialement les plus intérieurs des éléments de renfort filaires de frettage textiles les plus radialement intérieurs parmi les éléments de renfort filaires de frettage textiles,
- la surface radialement extérieure passant par les points radialement les plus extérieurs des éléments de renfort filaires de travail métalliques de la couche de travail radialement la plus extérieure de l'armature de travail,
est telle que E2 ≤ 0,40 mm, de préférence E2 ≤ 0,30 mm, plus préférentiellement E2 ≤ 0,20 mm.

En effet, de façon à également améliorer le compromis entre la gêne vibratoire générée par les poches d'oxydation et la masse du pneumatique, ces modes de réalisation proposent de profiter également du ou des élément(s) filaire(s) de trame peu ou pas conducteur(s) des agents corrosifs pour réduire non seulement l'épaisseur du ou des matériaux séparant le fond de la découpure la plus profonde de la partie axialement centrale de la bande de roulement et les éléments de renfort filaires de frettage textiles de la partie axialement centrale de la bande de roulement mais pour également réduire l'épaisseur du ou des matériaux séparant les éléments de renfort filaires de frettage textiles de la partie axialement centrale de la bande de roulement et les éléments de renfort filaires de travail métallique de la couche de travail radialement la plus extérieure et donc radialement la plus proche des éléments de renfort filaires de frettage textiles de la partie axialement centrale de la bande de roulement. Cette épaisseur est représentée par la distance radiale moyenne E2. Ainsi, de façon analogue à E1, même si on augmente le risque de voir les agents corrosifs atteindre la couche de travail radialement la plus extérieure en réduisant la distance radiale moyenne E2 la séparant de l'armature de frettage, le fait d'empêcher la conduction des agents corrosifs par le ou les éléments filaires de trame permet de ne pas augmenter, voire de réduire la surface totale des poches d'oxydation.

De façon analogue à ce qui a été décrit pour E1, dans un premier compromis amélioré par rapport à l'état de la technique, on pourra choisir de réduire fortement la distance radiale moyenne E2. On empêchera alors l'augmentation de la surface totale des poches d'oxydation sans nécessairement les réduire mais on allégera fortement le pneumatique. Dans un deuxième compromis amélioré par rapport à l'état de la technique, on pourra choisir de réduire modérément la distance radiale moyenne E2. On réduira alors la surface totale des poches d'oxydation et on allégera modérément le pneumatique. Le choix du compromis sera choisi par l'homme du métier en fonction de l'usage auquel est destiné le pneumatique.

La détermination de la distance radiale moyenne E2 se fait comme la détermination de la distance radiale moyenne E1 *mutatis mutandis.*

Dans une première variante, E2 ≥ 0,05 mm, de préférence E2 ≥ 0,10 mm. La présence d'une épaisseur de matériau(x) non nulle permet d'éviter un contact direct entre les éléments de renfort filaires de frettage textiles et les éléments de renfort filaires de travail métalliques et donc une propagation trop importante des agents corrosifs depuis l'armature de frettage vers l'armature de travail. Une telle épaisseur non nulle permet également d'assurer un découplage mécanique de l'armature de travail et de l'armature de frettage.

Dans une deuxième variante, E2<0,05 mm. A l'inverse de la première variante, on cherchera ici à minimiser l'épaisseur de matériau(x), voire à la supprimer de façon à mettre en contact direct les éléments de renfort filaires de frettage textiles et les éléments de renfort filaires de travail métalliques. Même si une propagation des agents corrosifs pourrait se faire sur les éléments de renfort filaires de travail métalliques croisant le ou les éléments de renfort filaires de frettage textiles conduisant éventuellement ces agents corrosifs, le ou les éléments de renfort filaires de trame de l'invention réduiront voire supprimeront la propagation des agents corrosifs sur les éléments de renfort filaires de travail métalliques ne croisant pas le ou les éléments de renfort filaires de frettage textiles conduisant les agents corrosifs.

Que ce soit dans la première ou la deuxième variante, au moins un des éléments de renfort filaires de frettage textile est, dans certains modes de réalisation envisageables mais non limitatifs, au contact d'au moins un des éléments de renfort filaires de travail métalliques de la couche de travail radialement la plus extérieure. Comme expliqué précédemment, la mise en contact des éléments de renfort filaires de frettage textile et d'au moins un des éléments de renfort filaires de travail métalliques n'entrainent qu'une propagation limitée des agents corrosifs dans l'armature de travail grâce au ou aux éléments de renfort filaires de trame de l'invention.

Dans des modes de réalisation optionnels, dans la partie axialement centrale du sommet, la distance radiale moyenne H entre :
- la surface passant par le point radialement le plus intérieur de la ou chaque découpure la plus profonde de la partie axialement centrale de la bande de roulement et sensiblement parallèle à la surface de roulement, et
- la surface radialement extérieure passant par les points radialement les plus extérieurs des éléments de renfort filaires de travail métalliques de la couche de travail radialement la plus extérieure de l'armature de travail,
est telle que H ≤ 3,00 mm, de préférence H ≤ 2,75 mm, plus préférentiellement H ≤ 2,50 mm et encore plus préférentiellement H ≤ 2,35 mm.

La valeur relativement faible de E1 et optionnellement, la valeur relativement faible de E2 permettent, si on le souhaite, de réduire la distance radiale moyenne H et donc d'alléger le pneumatique. Dans d'autres modes de réalisation, on pourra, en réduisant E1 et optionnellement, en réduisant E2, conserver une valeur relativement élevée de H en augmentant la hauteur de sculpture, notamment pour augmenter le nombre de kilomètres que le pneumatique est susceptible de parcourir.

Dans un mode de réalisation, l'armature de frettage est délimitée axialement par deux bords axiaux de l'armature de frettage et comprend une bandelette enroulée en hélice sur plusieurs tours circonférentiels de façon à s'étendre axialement entre les bords axiaux de l'armature de frettage.

Dans une première variante de ce mode de réalisation, la bandelette est enroulée en hélice sur plusieurs tours circonférentiels de façon à ce que, dans la partie axialement centrale du sommet, deux tours circonférentiels adjacents de la bandelette ne se recouvrent pas axialement et radialement l'un avec l'autre. Ainsi, la bandelette présentant deux bords axiaux longitudinaux, dans la partie axialement centrale du sommet, les bords axiaux longitudinaux adjacents des deux tours circonférentiels adjacents sont axialement jointifs sans former de recouvrement axial et radial ou sont axialement distants l'un de l'autre sans former de recouvrement axial et radial entre les deux tours circonférentiels. Ainsi, on évite de former une épaisseur double dans l'armature de frettage. Dans le cas où les bords axiaux longitudinaux adjacents des deux tours circonférentiels adjacents sont distants l'un de l'autre sans former de recouvrement axial et radial entre les deux tours circonférentiels, on améliore ainsi le compromis entre l'endurance à haute vitesse et la masse du pneumatique en frettant davantage les parties les plus sensibles à la haute vitesse que sont notamment les parties axialement extérieures à la partie axialement centrale et en frettant moins les parties les moins sensibles à la haute vitesse qu'est notamment la partie axialement centrale.

Dans une deuxième variante de ce mode de réalisation, dans la partie axialement centrale du sommet, deux tours circonférentiels adjacents forment un recouvrement axial et radial entre eux. Dans cette deuxième variante, on parle généralement de tuilage en raison du recouvrement des tours de bandelettes les uns avec les autres à la manière de tuiles de toiture.

De façon à rendre le procédé de fabrication du pneumatique le plus productif possible, la bandelette comprend plusieurs éléments de renfort filaires de frettage textiles sensiblement parallèles les uns aux autres et noyés dans une matrice polymérique, de préférence une matrice élastomérique.

Avantageusement, chaque élément de renfort filaire de frettage textile s'étend selon une direction principale de frettage formant, avec la direction circonférentielle du pneumatique, un angle, en valeur absolue, inférieur ou égal à 10°, de préférence inférieur ou égal à 7° et plus préférentiellement inférieur ou égal à 5°.

Dans un mode de réalisation avantageux, les éléments de renfort filaires de frettage textiles sont reliés les uns aux autres par plusieurs éléments filaires de trame sensiblement parallèles les uns aux autres selon une direction principale de trame non-colinéaire avec la direction principale de frettage, les éléments filaires de trame étant discontinus les uns avec les autres.

De façon optionnelle, la direction principale de trame forme un angle supérieur ou égal à 45°, de préférence supérieur ou égal à 75° avec la direction principale de frettage.

Afin de fabriquer l'armature de frettage et la bandelette des modes de réalisation précédemment décrits, on fabrique une bandelette qui, une fois enroulée en hélice autour de l'armature de travail, forme l'armature de frettage. Lors d'une étape de fabrication d'un tissu de grande largeur, on agence sensiblement parallèlement les uns aux autres les éléments de renfort filaires de frettage textiles. Puis, on sépare les éléments de renfort filaires de frettage textiles en une première et une deuxième nappe d'éléments de renfort filaires de frettage textiles.

Puis, on relie entre eux les éléments de renfort filaires de frettage textiles par un ou plusieurs éléments filaires de trame, chaque élément filaire de trame s'étendant sur toute la largeur du tissu de grande largeur. Pour ce faire, on entrelace alternativement les éléments filaires de trame avec les éléments de renfort filaires de frettage textiles de la première nappe d'éléments filaires de chaine et de la deuxième nappe d'éléments filaires de chaine.

Lors d'une étape ultérieure d'encollage, on revêt les éléments de renfort filaires de frettage textiles et les éléments filaires de trame d'une ou de plusieurs couches d'une ou de plusieurs compositions adhésives, puis on traite thermiquement le tissu de grande largeur précédemment obtenu de façon à obtenir un tissu de grand largeur encollé.

Puis, lors d'une étape ultérieure de calandrage, on noie le tissu de grande largeur encollé dans une matrice élastomérique de façon à obtenir un tissu de grande largeur calandré.

Ensuite, lors d'une étape de découpage, on découpe le tissu de grande largeur calandré de façon à obtenir plusieurs bandelettes de petite largeur dans lesquelles les éléments de renfort filaires de frettage textiles s'étendent selon une direction sensiblement parallèle à la direction de la plus grande longueur de la bandelette.

On notera que lors de l'étape dans laquelle on relie entre eux les éléments de renfort filaires de frettage textiles par un ou plusieurs éléments filaires de trame, on pourra, dans certains modes de réalisation utiliser un métier sans navette, par exemple un métier à projectiles, un métier à lances flexibles ou rigides ou un métier à projection. Dans le cas d'un métier à projection, on utilisera très avantageusement un métier à jet d'air en combinaison avec des éléments filaires de trame ébouriffés. Par élément filaire de trame ébouriffé, on entend un élément filaire comprenant des monofilaments, des fibres ou des fils sortant du cercle circonscrit à un élément filaire théorique correspondant à l'élément filaire de trame duquel on a enlevé les monofilaments, des fibres ou des fils sortant du cercle circonscrit. Par élément filaire de trame ébouriffé, on entend que l'élément filaire de trame n'est ni lisse ni texturé tel que décrit dans la demande WO2015016791.

Dans d'autres modes de réalisation, on pourra utiliser un métier avec navette ne nécessitant pas spécifiquement d'éléments filaires de trame ébouriffés.

Dans des modes de réalisation, chaque élément de renfort filaire de frettage textile comprend un ou plusieurs monofilament(s) synthétique(s) organique(s), de préférence un assemblage comprenant plusieurs monofilaments synthétiques organiques. Ainsi, les éléments filaires de frettage textiles sont non conducteurs des agents corrosifs et on évite autant que possible la propagation de ces agents corrosifs le long des éléments filaires de frettage textiles agencés à proximité ou au contact des agressions.

De façon optionnelle, les monofilaments synthétiques polymériques organiques sont choisis parmi les monofilaments de polyester, les monofilaments de polyamide aliphatique, les monofilaments de polyamide aromatique, les monofilaments de polycétone et les assemblages de ces monofilaments, de préférence parmi les monofilaments de polyester, les monofilaments de polyamide aliphatique, les monofilaments de polyamide aromatique et les assemblages de ces monofilaments et encore plus préférentiellement parmi les monofilaments de polyester, les monofilaments de polyamide aliphatique et les assemblages de monofilaments de polyamide aliphatique et de monofilaments de polyamide aromatique. Parmi les polyesters, on choisira préférentiellement le PET (poly(téréphtalate d'éthylène), le PEN (poly(naphtalate d'éthylène) et le PEF (polyéthylène 2,5-furandicarboxylate) et plus particulièrement le PET. Parmi les polyamides aliphatiques, on choisira préférentiellement les polyamides aliphatiques 6 ou 6.6. Parmi les polyamides aromatiques, on choisira préférentiellement les poly(métaphénylène isophtalamides) et les poly(paraphénylène téréphtalamide).

Dans des modes de réalisation avantageux, la ou chaque couche de travail est délimitée axialement par deux bords axiaux de la ou chaque couche de travail et comprend des éléments de renfort filaires de travail métalliques s'étendant axialement d'un bord axial à l'autre bord axial de la ou chaque couche de travail les uns sensiblement parallèlement aux autres.

De façon optionnelle et quelle que soit la configuration de l'armature de travail, chaque élément de renfort filaire de travail métallique s'étend selon une direction principale formant, avec la direction circonférentielle du pneumatique, un angle, en valeur absolue, strictement supérieur à 10°, de préférence allant de 15° à 50° et plus préférentiellement allant de 20° à 35°.

Dans une première configuration de l'armature de travail, l'armature de travail comprend une couche de travail radialement intérieure et une couche de travail radialement extérieure agencée radialement à l'extérieure de la couche de travail radialement intérieure. Dans cette variante, la direction principale selon laquelle s'étend chaque élément de renfort filaire de travail de la couche de travail radialement la plus intérieure et la direction principale selon laquelle s'étend chaque élément de renfort filaire de travail de la couche de travail radialement la plus extérieure forment, avec la direction circonférentielle du pneumatique, des angles d'orientations opposées. Les angles pourront avoir des valeurs absolues identiques ou différentes.

Dans une deuxième configuration de l'armature de travail, l'armature de travail comprend une unique couche de travail. Dans cette deuxième configuration, la couche de travail radialement la plus extérieure est donc l'unique couche de travail. La présence d'une unique couche de travail permet notamment d'alléger le pneumatique, donc de réduire l'énergie dissipée par hystérèse du sommet et donc de réduire la résistance au roulement du pneumatique. Ainsi, l'armature de travail est, à l'exception de la couche de travail, dépourvue de toute couche renforcée par des éléments de renfort filaires. Les éléments de renfort filaires de telles couches renforcées exclues de l'armature de travail du pneumatique comprennent les éléments de renfort filaires métalliques et les éléments de renfort filaires textiles. De façon très préférentielle, l'armature de travail est constituée par l'unique couche de travail.

Dans un mode de réalisation permettant de réduire la masse des éléments de renfort filaires de travail métalliques, chaque élément de renfort filaire de travail métallique de la ou de chaque couche de travail est constitué par un monofilament métallique.

De façon optionnelle, le pneumatique comprenant deux bourrelets, deux flancs reliant chacun chaque bourrelet au sommet et une armature de carcasse ancrée dans chaque bourrelet, l'armature de carcasse s'étend radialement dans chaque flanc et axialement dans le sommet radialement intérieurement à l'armature de sommet.

Dans une première configuration de l'armature de carcasse, l'armature de carcasse comprend une unique couche de carcasse. Dans cette première configuration, l'armature de carcasse est, à l'exception de l'unique couche de carcasse, dépourvue de toute couche renforcée par des éléments de renfort filaires. Les éléments de renfort filaires de telles couches renforcées exclues de l'armature de carcasse du pneumatique comprennent les éléments de renfort filaires métalliques et les éléments de renfort filaires textiles. De façon très préférentielle, l'armature de carcasse est constituée par l'unique couche de carcasse
Dans une deuxième configuration de l'armature de carcasse, l'armature de carcasse comprend deux couches de carcasse. Dans cette deuxième configuration, de préférence, les directions principales des éléments de renfort filaires de carcasse des deux couches de carcasse sont sensiblement parallèles les unes aux autres.

De façon avantageuse, l'armature de carcasse comprenant au moins une couche de carcasse, la ou chaque couche de carcasse est délimitée axialement par deux bords axiaux de la ou chaque couche de carcasse et comprend des éléments de renfort filaires textiles de carcasse s'étendant axialement d'un bord axial à l'autre bord axial de la ou chaque couche de carcasse.

Dans une première variante de l'armature de carcasse utilisable en combinaison avec la première et la deuxième configuration de l'armature de carcasse ainsi qu'avec les première et la deuxième configuration de l'armature de travail, chaque élément de renfort filaire de carcasse s'étend selon une direction principale de chaque élément de renfort filaire de carcasse formant, avec la direction circonférentielle du pneumatique un angle sensiblement constant entre chaque bord axial de la ou chaque couche de carcasse et en valeur absolue, supérieur ou égal à 60°, de préférence allant de 80° à 90°.

Dans une deuxième variante de l'armature de carcasse utilisable en combinaison avec la première et la deuxième configuration de l'armature de carcasse, l'armature de travail comprenant une unique couche de travail, chaque élément de renfort filaire de carcasse s'étend selon une direction principale de chaque élément de renfort filaire de carcasse formant, avec la direction circonférentielle du pneumatique :
- un angle, en valeur absolue, strictement inférieur à 80° dans une portion axialement centrale de la couche de carcasse s'étendant axialement à l'aplomb radial de la couche de travail,
- un angle, en valeur absolue, allant de 80° à 90° dans deux portions axialement latérales de la couche de carcasse s'étendant radialement axialement entre la portion axialement centrale et chaque bord axial de la couche de carcasse.

L'invention sera mieux comprise à la lecture de la description qui va suivre, donnée uniquement à titre d'exemple non limitatif et faite en se référant aux dessins dans lesquels:
- la figure 1 est une vue, dans un plan de coupe méridien, d'un pneumatique selon un premier mode de réalisation de l'invention,
- la figure 2 est une vue schématique en arraché du pneumatique de la figure 1 illustrant l'agencement des éléments de renfort filaires dans le sommet,
- la figure 3 est une vue de dessus de la bande de roulement du pneumatique de la figure 1,
- la figure 4 est une vue de détail de la partie axialement centrale du sommet du pneumatique de la figure 1,
- la figure 5 est une vue de l'armature de frettage du pneumatique de la figure 1,
- la figure 6 est une photographie d'un élément filaire de trame et de plusieurs éléments de renfort filaires de frettage textiles de l'armature de frettage de la figure 5,
- la figure 7 et la figure 8 sont des vues analogues à celles de la figure 1 et de la figure 4 d'un pneumatique selon un deuxième mode de réalisation,
- la figure 9 est une vue analogue à celle de la figure 4 d'un pneumatique selon un troisième mode de réalisation,
- la figure 10 est une vue analogue à celle de la figure 5 du pneumatique selon le troisième mode de réalisation,
- la figure 11 et la figure 12 sont des vues analogues à celles de la figure 9 et de la figure 10 d'un pneumatique selon un quatrième mode de réalisation.

Sur les figures, on a représenté un repère X, Y, Z correspondant aux directions habituelles respectivement axiale (Y), radiale (Z) et circonférentielle (X) d'un pneumatique.

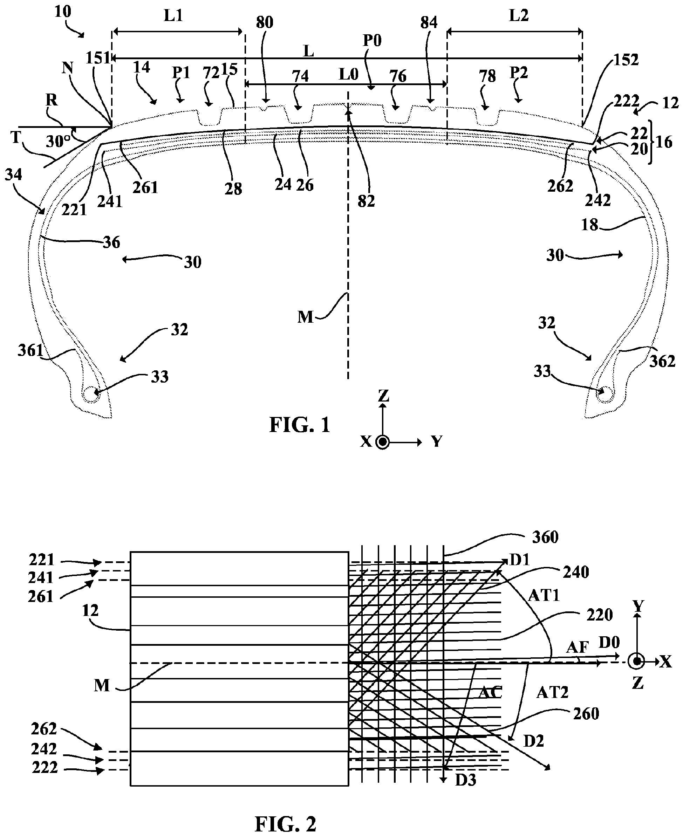

On a représenté sur la figure 1 à 6 un pneumatique, conforme à l'invention et désigné par la référence générale 10. Le pneumatique 10 présente une forme sensiblement torique autour d'un axe de révolution sensiblement parallèle à la direction axiale Y Le pneumatique 10 est destiné à un véhicule de tourisme et présente des dimensions 225/45 R17. Sur les différentes figures, le pneumatique 10 est représenté à l'état neuf, c'est-à-dire n'ayant pas encore roulé.

Le pneumatique 10 comprend un sommet 12 comprenant une bande de roulement 14 portant une surface de roulement 15 destinée à entrer en contact avec un sol lors du roulage du pneumatique 10. La surface de roulement 15 est délimitée axialement par des premier et deuxième extrémités axiales 151, 152 passant par chaque point N agencé de part et d'autre du plan médian M et pour lequel l'angle entre la tangente T à la surface de roulement 15 et une droite parallèle R à la direction axiale Y passant par ce point est égal à 30°. La surface de roulement 15 présente une largeur axiale L mesurée comme la distance axiale de la première extrémité axiale 151 jusqu'à la deuxième extrémité axiale 152. Le sommet 12 comprend une partie axialement centrale P0 ainsi que deux parties axialement latérales P1 et P2 agencées axialement de part et d'autre de la partie axialement centrale P0 par rapport au plan médian M.

La portion axialement centrale P0 s'étend axialement sur une largeur axiale L0 égale à 50% de la largeur axiale L de la surface de roulement 15. Chaque première et deuxième portion axialement latérale P1, P2 présente une largeur axiale L1, L2 égale à 25% de la largeur axiale L de la surface de roulement 15. La portion axialement centrale P0 est axialement centrée sur le plan médian M.

En référence à la figure 1, la figure 3 et la figure 4, la bande de roulement 14 comprend des découpures comprenant des découpures circonférentielles principales 72, 74, 76, 78, des découpures circonférentielles secondaires 80, 82, 84 ainsi que des découpures transversales 90, 92, 94, 96, 98. Les découpures circonférentielles principales 72, 74, 76, 78 sont des rainures circonférentielles.

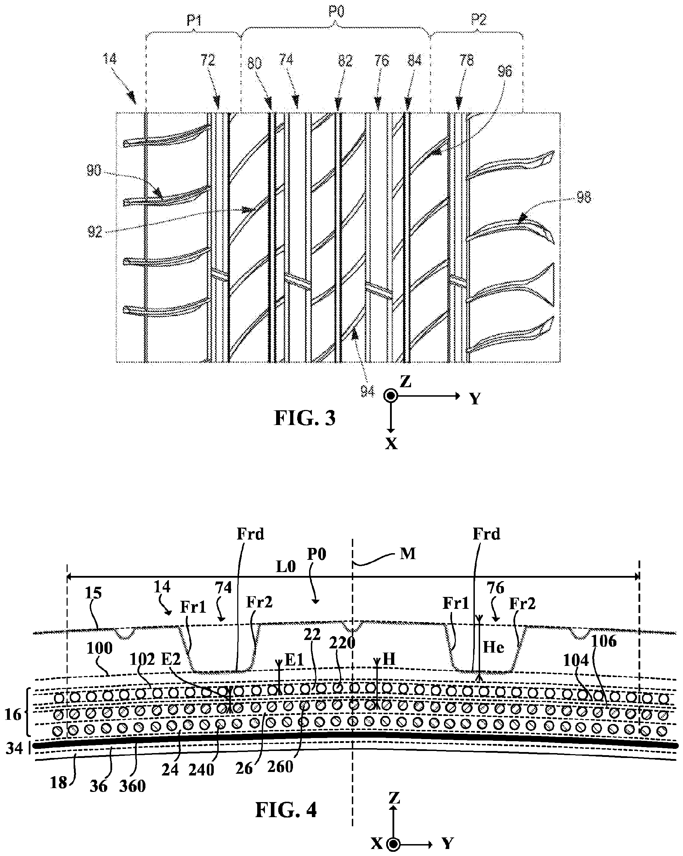

En référence à la figure 4, chaque découpure circonférentielle principale 72, 74, 76, 78 comprend deux faces latérales Fr1, Fr2 ainsi qu'une face de fond Frd. Chaque découpure circonférentielle principale 72, 74, 76, 78 présente une profondeur He allant de 4,00 mm à la hauteur de sculpture Hs, de préférence allant de 5,00 mm à la hauteur de sculpture Hs et plus préférentiellement allant de 5,50 mm à la hauteur de sculpture Hs. Chaque profondeur est supérieure ou égale à 50% de la hauteur de sculpture Hs. Ici, Hs=6,50 mm et, ici chaque découpure circonférentielle principale 74, 76 présente une profondeur égale He=Hs=6,50 mm et chaque découpure circonférentielle principale 72, 78 présente une profondeur égale 6,00 mm. Ainsi, chaque découpure circonférentielle principale 74, 76 est une découpure la plus profonde du pneumatique 10 et notamment de la partie axialement centrale P0.

Le sommet 12 comprend également une armature de sommet 16 s'étendant dans le sommet 12 selon la direction circonférentielle X. Le pneumatique 10 comprend également une couche d'étanchéité 18 à un gaz de gonflage étant destiné à délimiter une cavité interne fermée avec un support de montage du pneumatique 10 une fois le pneumatique 10 monté sur le support de montage, par exemple une jante.

L'armature de sommet 16 comprend une armature de travail 20 et une armature de frettage 22.

L'armature de travail 20 comprend deux couches de travail 24, 26. La couche de travail 26 radialement extérieure est agencée radialement à l'extérieur de la couche de travail 24 radialement intérieure. La couche de travail 26 radialement extérieure est donc la couche de travail radialement la plus extérieure de l'armature de travail 20.

L'armature de frettage 22 comprend au moins une couche de frettage et comprend ici une couche de frettage 28.

L'armature de sommet 16 est surmontée radialement de la bande de roulement 14. Ici, l'armature de frettage 22, ici la couche de frettage 28, est agencée radialement à l'extérieur de l'armature de travail 20 et radialement à l'intérieur de la bande de roulement 14. L'armature de frettage 22 est donc radialement intercalée entre l'armature de travail 20 et la bande de roulement 14.

Le pneumatique 10 comprend deux flancs 30 prolongeant le sommet 12 radialement vers l'intérieur. Le pneumatique 10 comporte en outre deux bourrelets 32 radialement intérieurs aux flancs 30. Chaque flanc 30 relie chaque bourrelet 32 au sommet 12.

Le pneumatique 10 comprend une armature de carcasse 34 ancrée dans chaque bourrelet 32, en l'espèce est enroulée autour de deux tringles 33. L'armature de carcasse 34 s'étend radialement dans chaque flanc 30 et axialement dans le sommet 12 radialement intérieurement à l'armature de sommet 16. L'armature de sommet 16 est agencée radialement entre la bande de roulement 14 et l'armature de carcasse 34. L'armature de carcasse 34 comprend au moins une couche de carcasse et ici comprend une unique couche de carcasse 36. En l'espèce, l'armature de carcasse 34 est constituée de l'unique couche de carcasse 36.

En référence à la figure 4, chaque couche de travail 24, 26, de frettage 28 et de carcasse 36 comprend une matrice polymérique, ici une matrice élastomérique dans laquelle sont noyés un ou des éléments de renfort filaires de la couche correspondante. Les interfaces entre deux couches adjacentes différentes couches sont représentées par des lignes en pointillés. On va maintenant décrire ces couches en référence aux figures 2 à 5.

L'armature de frettage 22, ici la couche de frettage 28, est délimitée axialement par deux bords axiaux 221, 222 de l'armature de frettage 22. L'armature de frettage 22 comprend une bandelette 40 enroulée en hélice sur plusieurs tours circonférentiels Ci de façon à s'étendre axialement entre les bords axiaux 221, 222 de l'armature de frettage 22.

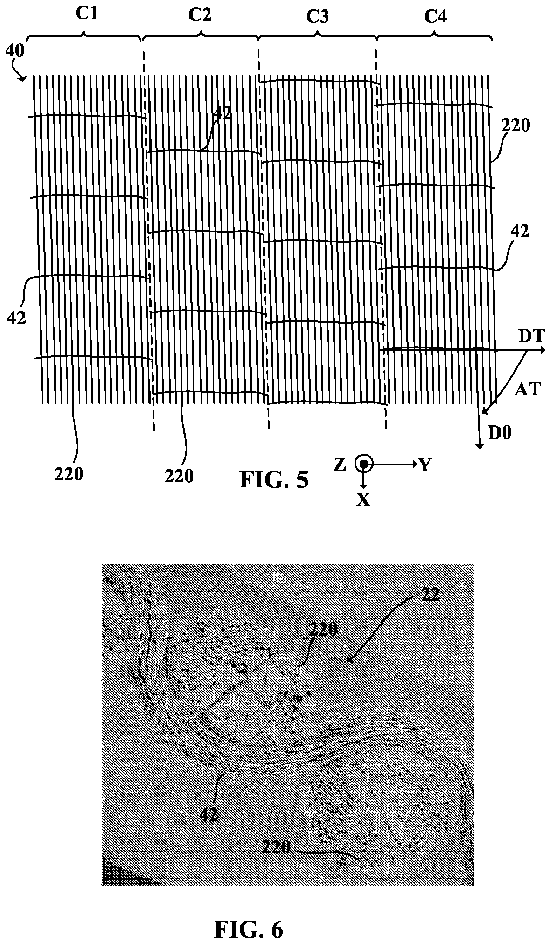

On a représenté plusieurs tours C1 à C4 sur la figure 5 agencés dans la partie axialement centrale P0 du sommet 12. La bandelette 40 comprend plusieurs éléments de renfort filaires de frettage textiles 220 sensiblement parallèles les uns aux autres et noyés dans la matrice élastomérique de la couche de frettage 28 décrit ci-dessus de sorte que les éléments de renfort filaires de frettage textiles 220 sont enroulés en hélice radialement autour de l'armature de travail 20. La bandelette 40 est enroulée en hélice sur plusieurs tours circonférentiels Ci de façon à ce que, dans la partie axialement centrale P0 du sommet 12, deux tours circonférentiels adjacents Ci de la bandelette 40 ne se recouvrent pas axialement et radialement l'un avec l'autre. Ainsi, comme cela est visible sur la figure 5, il n'existe pas, dans la partie axialement centrale P0 du sommet 12, de superposition radiale entre un des éléments filaires de renfort de frettage textiles d'un tour circonférentiel Ci de la bandelette 40 et un des éléments filaires de renfort de frettage textiles d'un tour circonférentiel Cj adjacent au tour circonférentiel Ci.

Chaque élément de renfort filaire de frettage textile 220 s'étend selon une direction principale de frettage D0 formant, avec la direction circonférentielle X du pneumatique 10, un angle AF, en valeur absolue, inférieur ou égal à 10°, de préférence inférieur ou égal à 7° et plus préférentiellement inférieur ou égal à 5°. Ici, AF=-5°. La bandelette 40 comprend une densité de 120 éléments de renfort filaires de frettage textiles par décimètre de bandelette 40, cette densité étant mesurée perpendiculairement à la direction D0.

Au sein de la bandelette 40, les éléments de renfort filaires de frettage textiles 220 sont reliés les uns aux autres par plusieurs éléments filaires de trame 42 sensiblement parallèles les uns aux autres selon une direction principale de trame DT non-colinéaire avec la direction principale de frettage D0. Les éléments filaires de trame 42 sont discontinus les uns avec les autres. La direction principale de trame DT forme un angle AT supérieur ou égal à 45°, de préférence supérieur ou égal à 75° avec la direction principale de frettage D0 et ici sensiblement égal à 90°.

La couche de travail radialement intérieure 24 est délimitée axialement par deux bords axiaux 241, 242. La couche de travail radialement intérieure 24 comprend des éléments de renfort filaires de travail métalliques 240 s'étendant axialement du bord axial 241 à l'autre bord axial 242 les uns sensiblement parallèlement aux autres selon une direction principale D1. De façon analogue, la couche de travail radialement extérieure 26 est délimitée axialement par deux bords axiaux 261, 262. La couche de travail radialement extérieure 26 comprend des éléments de renfort filaires de travail métalliques 260 s'étendant axialement du bord axial 261 à l'autre bord axial 262 les uns sensiblement parallèlement aux autres selon une direction principale D2. La direction principale D1 selon laquelle s'étend chaque élément de renfort filaire de travail 240 de la couche de travail radialement intérieure 24 et la direction principale D2 selon laquelle s'étend chaque élément de renfort filaire de travail 260 de la couche de travail radialement extérieure 26 forment, avec la direction circonférentielle X du pneumatique 10, des angles respectivement AT1 et AT2 d'orientations opposées. Chaque direction principale D1, D2 forme, avec la direction circonférentielle X du pneumatique 10, un angle respectivement AT1, AT2, en valeur absolue, strictement supérieur à 10°, de préférence allant de 15° à 50° et plus préférentiellement allant de 20° à 35°. Ici, AT1=-26° etAT2=+26°.

La couche de carcasse 36 est délimitée axialement par deux bords axiaux 361, 362. La couche de carcasse 36 comprend des éléments de renfort filaires de carcasse 360 s'étendant axialement du bord axial 361 à l'autre bord axial 362 de la couche de carcasse 36 selon une direction principale D3 formant avec la direction circonférentielle X du pneumatique 10, un angle AC sensiblement constant entre chaque bord axial 361, 362, en valeur absolue, supérieur ou égal à 60°, de préférence allant de 80° à 90° et ici AC=+90°.

On a représenté sur la figure 6 une vue en coupe de l'armature de frettage 22 dans un plan de coupe perpendiculaire à la direction D0 et comprenant un des éléments filaires de trame 42. En référence à la figure 6, chaque élément de renfort filaire de frettage 220 comprend un ou plusieurs monofilament(s) synthétique(s) organique(s), de préférence comprend un assemblage comprenant plusieurs monofilaments synthétiques organiques. Les monofilaments synthétiques polymériques organiques sont choisis parmi les monofilaments de polyester, les monofilaments de polyamide aliphatique, les monofilaments de polyamide aromatique, les monofilaments de polycétone et les assemblages de ces monofilaments, de préférence parmi les monofilaments de polyester, les monofilaments de polyamide aliphatique, les monofilaments de polyamide aromatique et les assemblages de ces monofilaments et encore plus préférentiellement parmi les monofilaments de polyester, les monofilaments de polyamide aliphatique et les assemblages de monofilaments de polyamide aliphatique et de monofilaments de polyamide aromatique. En l'espèce, chaque élément de renfort filaire de frettage 220 comprend classiquement deux brins multifilamentaires, chaque brin multifilamentaire étant constitué d'un filé de monofilaments de polyamide aliphatique, ici de nylon d'un titre égal à 94 tex, ces deux brins multifilamentaires étant mis en hélice individuellement à 320 tours par mètre dans un sens puis mis en hélice ensemble à 320 tours par mètre dans le sens opposé. Ces deux brins multifilamentaires sont enroulés en hélice l'un autour de l'autre. En variante, on pourra utiliser un élément de renfort filaire de frettage 220 comprenant un brin multifilamentaire constitué d'un filé de monofilaments de polyamide aliphatique, ici de nylon d'un titre égal à 140 tex et un brin multifilamentaire constitué d'un filé de monofilaments de polyamide aromatique, ici d'aramide d'un titre égal à 167 tex, ces deux brins multifilamentaires étant mis en hélice individuellement à 290 tours par mètre dans un sens puis mis en hélice ensemble à 290 tours par mètre dans le sens opposé. Ces deux brins multifilamentaires sont enroulés en hélice l'un autour de l'autre. Dans cette variante, on auraAT1=-29° etAT2=+29°.

Toujours, en référence à la figure 6, chaque élément filaire de trame 42 comprend plusieurs monofilaments textiles et/ou plusieurs fibres textiles choisi(e)s parmi les monofilaments et les fibres synthétiques polymériques organiques, les monofilaments et les fibres synthétiques polymériques inorganiques et les assemblages de ces monofilaments et fibres. Plus précisément, au moins 50%, de préférence au moins 75% et ici 100% de la masse de chaque élément filaire de trame 42 est constituée par les monofilaments textiles et/ou fibres textiles choisi(e)s parmi les monofilaments et les fibres synthétiques polymériques organiques, les monofilaments et les fibres synthétiques polymériques inorganiques et les assemblages de ces monofilaments et fibres. En outre, au moins 50%, de préférence au moins 75% et ici 100% de la longueur cumulée des éléments filaires de trame 42 comprend plusieurs monofilaments textiles et/ou fibres textiles choisi(e)s parmi les monofilaments et les fibres synthétiques polymériques organiques, les monofilaments et les fibres textiles synthétiques polymériques inorganiques et les assemblages de ces monofilaments et fibres.

Au moins un des éléments filaires de trame 42 comprend plusieurs monofilaments et/ou fibres textiles synthétiques polymériques organiques. Plus précisément, au moins 50%, de préférence au moins 75% et ici 100% de la masse de chaque élément filaire de trame 42 est constituée par les monofilaments textiles et/ou fibres textiles choisi(e)s parmi les monofilaments et les fibres synthétiques polymériques organiques. En outre, au moins 50%, de préférence au moins 75% et ici 100% de la longueur cumulée des éléments filaires de trame 42 comprend plusieurs monofilaments et/ou fibres synthétiques polymériques organiques.

Les monofilaments et les fibres synthétiques polymériques organiques sont choisi(e)s parmi les monofilaments et les fibres de polyester, les monofilaments et les fibres de polyamide, les monofilaments et les fibres de polycétone, les monofilaments et les fibres de polyuréthane, les monofilaments et les fibres d'acrylique, les monofilaments et les fibres de polyoléfine, les monofilaments et les fibres de polyétheréthercétone et les assemblages de ces monofilaments et de ces fibres, de préférence parmi les monofilaments et les fibres de polyester, les monofilaments et les fibres de polyamide et les assemblages de ces monofilaments et de ces fibres et ici, les monofilaments et les fibres synthétiques organiques sont des monofilaments et des fibres de polyester.

En l'espèce, chaque élément filaire de trame 42 comprend, ici est constitué de, deux brins comprenant chacun une âme et une couche revêtant l'âme, l'âme comprenant plusieurs monofilaments de polyester et la couche comprenant plusieurs fibres de polyester. La somme des titres des brins de chaque élément filaire de trame 42 est égale à 22 tex. Le titre de chaque brin d'élément filaire de trame 42 va de 1 à 20 tex et de préférence de 10 à 15 tex. Ici, il est de 11 tex. Afin de fabriquer chaque élément filaire de trame 42, les deux brins sont enroulés en hélice l'un autour de l'autre à une torsion de 1100 tours par mètres, puis chaque élément filaire de trame 42 présente une torsion égale à 1100 tours par mètre. Le taux de reprise d'humidité de chaque élément filaire de trame 42 est égale à 1,8%.

La densité des éléments filaire de trame 42 va de 3,0 à 8,0 éléments filaires de trame par dm de longueur de la bandelette 40, de préférence de 3,0 à 6,0 éléments filaires de trame par dm de longueur de la bandelette 40 et plus préférentiellement de 3,0 à 5,5 éléments filaires de trame par dm de longueur de la bandelette 40. Ici, la densité des éléments filaires de trame 42 est égale à 5,0 éléments filaires de trame par dm de longueur de la bandelette 40.

Chaque élément de renfort filaire de travail métallique 240, 260 comprend un assemblage de deux monofilaments en acier enroulés en hélice au pas de 14 mm, chaque monofilament en acier présentant un diamètre égal à 0,30 mm. Sur la figure 4, pour des raisons de clarté, on a représenté le cercle circonscrit à cet assemblage et dont le diamètre est égal au diamètre de chaque élément de renfort filaire de travail métallique 240, 260. Dans une variante, chaque élément de renfort filaire de travail métallique 240, 260 est constitué par un monofilament en acier présentant un diamètre égal à 0,30 mm. D'une manière plus générale, les monofilaments en acier présentent des diamètres allant de 0,25 mm à 0,32 mm. Dans encore une autre variante, on pourra utiliser un assemblage de six monofilaments en acier présentant un diamètre égal à 0,23 mm et comprenant une couche interne de deux monofilaments enroulés ensemble en hélice au pas de 12,5 mm dans un premier sens, par exemple le sens Z, et une couche externe de quatre monofilaments enroulés ensemble en hélice autour de la couche interne au pas de 12,5 mm dans un deuxième sens opposé au premier sens, par exemple le sens S.

Chaque élément de renfort filaire de carcasse 360 comprend classiquement deux brins multifilamentaires, chaque brin multifilamentaire étant constitué d'un filé de monofilaments de polyester, ici de PET, ces deux brins multifilamentaires étant mis en hélice individuellement à 240 tours par mètre dans un sens puis mis en hélice ensemble à 240 tours par mètre dans le sens opposé. Chacun de ces brins multifilamentaires présente un titre égal à 220 tex. Dans d'autres variantes, on pourra utiliser des titres égaux à 144 tex et des torsions égales à 420 tours par mètre ou des titres égaux à 334 tex et des torsions égales à 270 tours par mètre.

Sur la figure 4, on a représenté :
- la surface 100 passant par le point radialement le plus intérieur de chaque découpure la plus profonde 74, 76 de la partie axialement centrale P0 de la bande de roulement 14 et sensiblement parallèle à la surface de roulement 15, et
- la surface radialement extérieure 102 passant par les points radialement les plus extérieurs des éléments de renfort filaires de frettage textiles 220 les plus radialement extérieurs parmi les éléments de renfort filaires de frettage textiles 220,
- la surface radialement intérieure 104 passant par les points radialement les plus intérieurs des éléments de renfort filaires de frettage textiles 220 les plus radialement intérieurs parmi les éléments de renfort filaires de frettage textiles 220,
- la surface radialement extérieure 106 passant par les points radialement les plus extérieurs des éléments de renfort filaires de travail métalliques 260 de la couche de travail radialement la plus extérieure 26 de l'armature de travail 20.

Dans la partie axialement centrale P0 du sommet 12, la distance radiale moyenne E1 entre la surface 100 et la surface radialement extérieure 102 est telle que E1 ≤ 2,00 mm. Ici, E1 ≤ 1,80 mm, de préférence E1 ≤ 1,50 mm. En outre, E1 ≥ 0,20 mm, de préférence E1 ≥ 0,50 mm et plus préférentiellement E1 ≥ 1,00 mm. En l'espèce E1=1,50 mm.

Dans la partie axialement centrale P0 du sommet 12, la distance radiale moyenne E2 entre la surface radialement intérieure 104 et la surface radialement extérieure 106 est telle que E2 ≤ 0,40 mm et de préférence E2 ≤ 0,30 mm. En outre, E2 ≥ 0,05 mm, de préférence E2 ≥ 0,10 mm. En l'espèce, E2=0,23 mm.

Dans la partie axialement centrale P0 du sommet 12, la distance radiale moyenne H entre la surface 100 et la surface radialement extérieure 106 est telle que H ≤ 3,00 mm, de préférence H ≤ 2,75 mm, plus préférentiellement H ≤ 2,50 mm et encore plus préférentiellement H ≤ 2,35 mm. En l'espèce, H=2,34 mm.

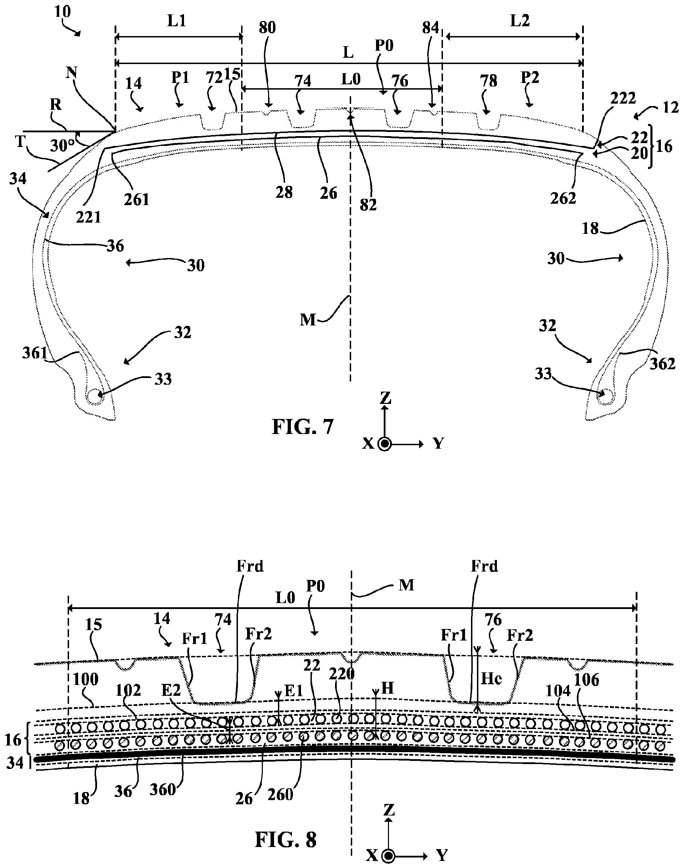

On va maintenant décrire un pneumatique selon un deuxième mode de réalisation en référence à la figure 7 et à la figure 8. Les éléments analogues à ceux du premier mode de réalisation sont désignés par des références identiques.

A la différence du pneumatique selon le premier mode de réalisation, l'armature de travail 20 du pneumatique 10 selon le deuxième mode de réalisation comprend une unique couche de travail 26, qui est donc la couche de travail radialement la plus extérieure de l'armature de travail 20.

En outre, chaque élément de renfort filaire de carcasse 360 s'étend selon une direction principale D3 de chaque élément de renfort filaire de carcasse 360 formant, avec la direction circonférentielle X du pneumatique 10 :
- un angle, en valeur absolue, strictement inférieur à 80° dans une portion axialement centrale de la couche de carcasse s'étendant axialement à l'aplomb radial de la couche de travail 26,
- un angle, en valeur absolue, allant de 80° à 90° dans deux portions axialement latérales de la couche de carcasse 36 s'étendant radialement axialement entre la portion axialement centrale et chaque bord axial de la couche de carcasse 36.

Des pneumatiques comprenant une unique couche de travail ainsi qu'une couche de carcasse telles que décrites ci-dessus ainsi que leurs procédés de fabrication sont notamment connus de EP3489035, FR2797213 et de FR1413102.

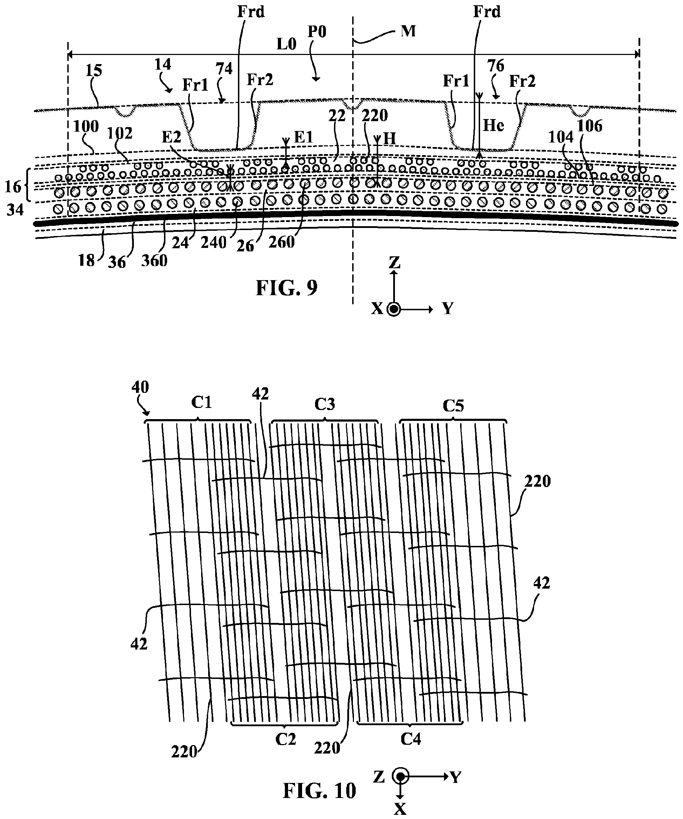

On va maintenant décrire un pneumatique selon un troisième mode de réalisation en référence à la figure 9 et à la figure 10. Les éléments analogues à ceux des modes de réalisation précédents sont désignés par des références identiques.

A la différence du premier mode de réalisation, deux tours circonférentiels adjacents Ci de bandelette 40 forment un recouvrement radial et axial entre eux.

Sur la figure 9, on a représenté les éléments de renfort filaires de frettage textiles en forme de rond blanc lorsqu'ils appartiennent à un tour circonférentiel Ci donné et en forme de rond rempli par des petits points lorsqu'ils appartiennent au tour circonférentiel Ci+1 adjacent au tour circonférentiel Ci.

Dans ce mode de réalisation, la surface radialement extérieure 102 est, conformément à l'invention, la surface passant par les points radialement les plus extérieurs des éléments de renfort filaires de frettage textiles 220 les plus radialement extérieurs parmi les éléments de renfort filaires de frettage textiles 220. Ici les éléments de renfort filaires de frettage textiles 220 les plus radialement extérieurs parmi les éléments de renfort filaires de frettage textiles 220 sont les éléments de renfort filaires de frettage textiles 220 de chaque tour circonférentiel recouvrant radialement les éléments de renfort filaires de frettage textiles 220 du tour circonférentiel adjacent.

En outre, dans ce mode de réalisation, la surface radialement intérieure 104 est, conformément à l'invention, la surface passant par les points radialement les plus intérieurs des éléments de renfort filaires de frettage textiles 220 les plus radialement intérieurs parmi les éléments de renfort filaires de frettage textiles 220. Ici les éléments de renfort filaires de frettage textiles 220 les plus radialement intérieurs parmi les éléments de renfort filaires de frettage textiles 220 sont, d'une part, les éléments de renfort filaires de frettage textiles 220 de chaque tour circonférentiel étant recouverts radialement par les éléments de renfort filaires de frettage textiles 220 du tour circonférentiel adjacent et, d'autre part, les éléments de renfort filaires de frettage textiles 220 de chaque tour circonférentiel non recouvert par d'autres éléments de renfort filaires de frettage textiles 220.

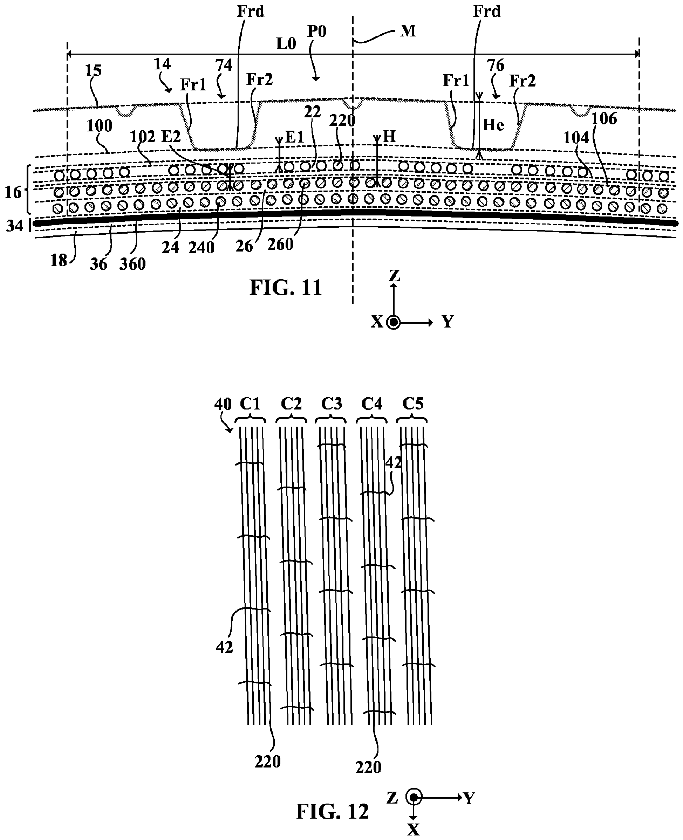

On va maintenant décrire un pneumatique selon un quatrième mode de réalisation en référence à la figure 11 et à la figure 12. Les éléments analogues à ceux des modes de réalisation précédents sont désignés par des références identiques.

De façon analogue aux premier et deuxième modes de réalisation, le pneumatique 10 selon le quatrième mode de réalisation est tel que la bandelette 40 est enroulée en hélice sur plusieurs tours circonférentiels Ci de façon à ce que, dans la partie axialement centrale P0 du sommet 12, deux tours circonférentiels adjacents Ci de la bandelette 40 ne se recouvrent pas axialement et radialement l'un avec l'autre. Ainsi, comme cela est visible sur la figure 11 et la figure 12, il n'existe pas, dans la partie axialement centrale P0 du sommet 12, de superposition radiale entre un des éléments filaires de renfort de frettage textiles d'un tour circonférentiel Ci de la bandelette 40 et un des éléments filaires de renfort de frettage textiles d'un tour circonférentiel Cj adjacent au tour circonférentiel Ci. A la différence des premier et deuxième modes de réalisation, dans la partie axialement centrale du sommet, les bords axiaux longitudinaux adjacents des deux tours circonférentiels adjacents sont axialement distants l'un de l'autre sans former de recouvrement axial et radial entre les deux tours circonférentiels.

### TESTS COMPARATIFS

### Premier test comparatif

On a comparé deux pneumatiques témoins T0 et T1 identiques entre eux à l'exception de leur armature de frettage ainsi que de la distance radiale E2 lors d'un test de roulage agressif décrit ci-dessous.

Le pneumatique témoin T0 comprend une armature de frettage dans laquelle les éléments de renfort filaires de trame textiles ne sont reliés les uns aux autres par aucun élément filaire de trame. En d'autres termes, l'armature de frettage du pneumatique témoin T0 est dépourvue d'élément filaire de trame. En outre, E2=0,11 mm.

Le pneumatique témoin T1 comprend une armature de frettage dans laquelle les éléments de renfort filaires de trame textiles sont reliés les uns aux autres des éléments filaires de trame comprenant des fibres de coton. En outre, E2=0,30 mm.

On a gonflé chaque pneumatique testé à une pression égale à 80% de sa pression de gonflage nominale sur un véhicule de tourisme sur lequel il est destiné et apte à être monté. On a fait rouler ce véhicule sur un circuit comprenant une portion de chaussée goudronnée et une portion de chaussée revêtue de cailloux concassés de façon à présenter des arêtes et des extrémités saillantes permettant d'agresser la bande de roulement du pneumatique testé. Le véhicule effectue plusieurs tours de ce circuit de façon à permettre l'agression de la bande de roulement par les cailloux concassés que ce soit lors du passage dans la portion de chaussée revêtue de cailloux concassés ou lors du passage dans la portion de chaussée goudronnée dans le cas où des cailloux concassés se seraient coincés dans la bande de roulement. Le circuit comprend également une portion humide comprenant un bac d'eau saline permettant l'entrée d'agents corrosifs dans les agressions causées par les cailloux. Après un roulage suffisant, par exemple plusieurs milliers de kilomètres, on retire la bande de roulement ainsi que l'armature de frettage de chaque pneumatique testé et on analyse la couche de travail radialement la plus extérieure de l'armature de travail.

Au cours de cette analyse, on compte tout d'abord le nombre Np d'agressions présentes sur la couche de travail radialement la plus extérieure de l'armature de travail. En outre, pour chaque poche d'oxydation, on mesure la surface de chaque poche d'oxydation. Puis, on en déduit la surface totale St de l'ensemble des poches d'oxydation de la couche de travail radialement la plus extérieure de l'armature de travail.

On a rassemblé les différentes caractéristiques des pneumatiques témoins T0, T1 ainsi que les résultats au test de roulage agressif décrit ci-dessus dans le tableau 1 ci-dessous.

Le nombre d'agressions Np est donné en base 100 par rapport au pneumatique témoin T1. Un nombre Np supérieur à 100 signifie que la couche de travail radialement la plus extérieure du pneumatique testé présente plus d'agressions que le pneumatique témoin T1.

De façon analogue, la surface totale St est donnée en base 100 par rapport au pneumatique témoin T1. Une surface totale St supérieure à 100 signifie que la couche de travail radialement la plus extérieure du pneumatique testé présente une surface totale de poches d'oxydation supérieure à celle du pneumatique témoin T1.

**Tableau 1**

| | Pneumatique T1 | Pneumatique T0 |
|---|---|---|
| E2 (mm) | 0,30 | 0,11 |
| Présence d'éléments filaires de trame | Oui | Non |
| Np | 100 | 165 |
| St | 100 | 49 |

Ce premier test comparatif montre que la présence d'éléments filaires de trame en coton dans le pneumatique témoin T1 engendre une augmentation significative de la surface totale St de poches d'oxydation par rapport au pneumatique témoin T0 dans lequel aucun élément filaire de trame n'est présent dans l'armature de frettage.

On notera que cela est d'autant plus inattendu que, d'une part, le nombre d'agressions Np est bien supérieur dans le pneumatique témoin T0 que dans le pneumatique témoin T1 et que, d'autre part, la distance radiale moyenne E2 est significativement inférieure dans le pneumatique témoin T0 par rapport au pneumatique témoin T1. En effet, avec un nombre d'agressions Np plus élevé, on se serait attendu à un nombre de poches d'oxydation plus élevé et donc à une surface totale St de poches d'oxydation plus élevée dans le pneumatique témoin T0 que dans le pneumatique témoin T1. En outre, avec une distance radiale moyenne E2 plus faible et donc une épaisseur de matériau(x) plus faible, on se serait attendu à une propagation plus facile des agents corrosifs et donc à une surface totale St de poches d'oxydation plus élevée dans le pneumatique témoin T0 que dans le pneumatique témoin T1.

### Deuxième test comparatif

On a comparé des pneumatiques témoins T2, T3 ainsi qu'un pneumatique 10 selon le premier mode de réalisation décrit précédemment.

Le pneumatique témoin T3 comprend des éléments de renfort filaires de frettage identiques à ceux du pneumatique 10 selon le premier mode de réalisation. Dans le pneumatique témoin T2, chaque élément filaire de renfort de frettage comprend deux brins multifilamentaires, chaque brin multifilamentaire étant constitué d'un filé de monofilaments de polyamide aliphatique, ici de nylon d'un titre égal à 140 tex, ces deux brins multifilamentaires étant mis en hélice individuellement à 250 tours par mètre dans un sens puis mis en hélice ensemble à 250 tours par mètre dans le sens opposé.

En outre, dans le pneumatique témoin T3 et le pneumatique 10 selon le premier mode de réalisation, E1=1,50 mm. Dans le pneumatique témoin T2, E1=2,30 mm.

De plus, on a E2=0,44 mm dans le pneumatique témoin T2, E2=0,38 mm dans le pneumatique témoin T3 alors que E2=0,23 mm dans le pneumatique 10 selon le premier mode de réalisation.

En outre, les éléments filaires de trame comprennent des fibres de coton pour les pneumatiques témoins T2 et T3 alors que les éléments filaires de trame du pneumatique 10 selon le premier mode de réalisation sont tels que décrits précédemment.

On a comparé les pneumatiques témoins T2, T3 et 10 selon le premier mode de réalisation dans le test de roulage agressif décrit ci-dessus. On a également mesuré les masses des pneumatiques ainsi que leur résistance au roulement conformément à l'annexe 6 du règlement 117 de la Commission économique pour l'Europe des Nations unies.

On a rassemblé les différentes caractéristiques des pneumatiques témoins T2, T3 et 10 selon le premier mode de réalisation ainsi que les résultats au test de roulage agressif et des mesures de masse et de résistance au roulement dans le tableau 2 ci-dessous.

**Tableau 2**

| | Pneumatique T2 | Pneumatique T3 | Pneumatique 10 |
|---|---|---|---|
| E1 (mm) | 2,30 | 1,50 | 1,50 |
| E2 (mm) | 0,44 | 0,38 | 0,23 |
| Eléments filaires de trame | Coton | Coton | PET |
| Np | 100 | 356 | 371 |
| St | 100 | 179 | 115 |
| Masse (kg) | 8,72 | 8,30 | 8,30 |
| Résistance au roulement (kg/T) | 7,52 | 7,08 | 7,08 |

En comparant les pneumatiques témoins T2 et T3, on constate qu'on a réduit de façon importante la distance radiale moyenne E1 et la distance radiale moyenne E2 de façon à alléger le pneumatique témoin T3 par rapport au pneumatique témoin T2. Ainsi, on a réduit de façon importante l'épaisseur du ou des matériau(x) protégeant les éléments de renfort filaires de frettage textiles des agressions et l'épaisseur du ou des matériau(x) protégeant les éléments de renfort filaires de travail métalliques des agents corrosifs propagés par les éléments filaires de trame. On observe ainsi une augmentation importante du nombre d'agressions Np et, en conséquence, une augmentation de la surface totale St des poches d'oxydation dans le pneumatique témoin T3 due à la propagation importante des agents corrosifs par l'intermédiaire des éléments filaires de trame en coton comme cela a été démontré lors du premier test de roulage agressif. Il doit également être noté que cela est d'autant plus remarquable que les éléments de renfort filaires de frettage du pneumatique témoin T2 étant plus gros que ceux des pneumatiques T3 et 10 selon le premier mode de réalisation, ces éléments de renfort filaires de frettage du pneumatique témoin T2 sont plus susceptibles de propager les agents corrosifs.

En comparant le pneumatique témoin T3 et le pneumatique 10 selon le premier mode de réalisation, on constate que, pour une distance radiale moyenne E1 identique, le nombre d'agressions Np est sensiblement le même. Toutefois, on observe une surface totale St des poches d'oxydation bien moindre pour le pneumatique 10 selon le premier mode de réalisation et ce malgré une valeur de E2 inférieure par rapport au pneumatique témoin T3. Conformément à l'invention, cela est dû à la présence d'éléments filaires de trame limitant voire supprimant la propagation des agents corrosifs dans l'armature de frettage.

En comparant le pneumatique témoin T2 et le pneumatique 10 selon le premier mode de réalisation, on constate que, pour des distances radiales moyennes E1 et E2 bien moindres pour le pneumatique 10 selon le premier mode de réalisation, le pneumatique 10 selon le premier mode de réalisation présente une surface totale St de poches d'oxydation qui n'est pas significativement supérieure à la surface totale St de poches d'oxydation du pneumatique témoin T2 et en tout cas, dont l'augmentation de la surface totale St des poches d'oxydation est sans commune mesure avec l'allègement du pneumatique et sans commune mesure avec le gain en résistance au roulement.

Ainsi, on conclut qu'en réduisant E1 et/ou E2 et donc en allégeant le pneumatique et donc en réduisant sa résistance au roulement, il est possible de limiter voire de réduire la formation des poches d'oxydation en utilisant des éléments filaires de trame conforme à l'invention empêchant la propagation des agents corrosifs.

L'invention ne se limite pas aux modes de réalisation précédemment décrits et n'est limitée que par les revendications ci-jointes.

On comprendra que l'on peut, afin d'obtenir l'effet technique de l'invention, tout à fait réduire davantage les épaisseurs E1 et E2. Ainsi, on pourrait envisager des pneumatiques dans lesquels E1 ≤ 1,40 mm et encore plus préférentiellement E1 ≤ 1,20 mm ce qui permettrait d'alléger davantage le pneumatique. On pourrait également envisager des pneumatiques dans lesquels E2 ≤ 0,20 mm ce qui permettrait, là encore, d'alléger davantage le pneumatique.

On pourra également envisager, dans les cas où il s'avère nécessaire de renforcer l'armature de carcasse 34, une armature de carcasse 34 comprenant deux couches de carcasse.

## Revendications

1. Pneumatique (10) comprenant un sommet (12) comprenant une bande de roulement (14) portant une surface de roulement (15), le sommet (12) comprenant une partie axialement centrale (P0) s'étendant sur une largeur axiale (L0) égale à 50% de la largeur axiale (L) de la surface de roulement (15) et axialement centrée sur le plan médian (M) du pneumatique (10), la partie axialement centrale (P0) de la bande de roulement (14) comprenant au moins une découpure (74, 76) la plus profonde de la partie axialement centrale (P0) de la bande de roulement (14),
le sommet (12) comprenant une armature de sommet (16) comprenant :
- une armature de travail (20) comprenant au moins une couche de travail radialement la plus extérieure (26) de l'armature de travail (20), la couche de travail (26) radialement la plus extérieure comprenant des éléments de renfort filaires de travail métalliques (260),
- une armature de frettage (22) comprenant plusieurs éléments de renfort filaires de frettage textiles (220) enroulés en hélice radialement autour de l'armature de travail (20) et reliés les uns aux autres par un ou plusieurs élément(s) filaire(s) de trame (42), l'armature de frettage (22) étant agencée radialement à l'extérieur de l'armature de travail (20) et radialement à l'intérieur de la bande de roulement (14),
**caractérisé en ce que,** dans la partie axialement centrale (P0) du sommet (12), la distance radiale moyenne E1 entre :
- la surface (100) passant par le point radialement le plus intérieur de la ou chaque découpure la plus profonde (74, 76) de la partie axialement centrale (P0) de la bande de roulement (14) et sensiblement parallèle à la surface de roulement (15), et
- la surface radialement extérieure (102) passant par les points radialement les plus extérieurs des éléments de renfort filaires de frettage textiles (220) les plus radialement extérieurs parmi les éléments de renfort filaires de frettage textiles (220),
est telle que E1 ≤ 2,00 mm, et
**en ce que** le ou au moins un des élément(s) filaire(s) de trame (42) comprend plusieurs monofilaments textiles et/ou plusieurs fibres textiles choisi(e)s parmi les monofilaments et les fibres synthétiques polymériques organiques, les monofilaments et les fibres synthétiques polymériques inorganiques et les assemblages de ces monofilaments et fibres.

2. Pneumatique (10) selon la revendication précédente, dans lequel E1 ≤ 1,80 mm, de préférence E1 ≤ 1,50 mm, plus préférentiellement E1 ≤ 1,40 mm et encore plus préférentiellement E1 ≤ 1,20 mm.

3. Pneumatique (10) selon l'une quelconque des revendications précédentes, dans lequel E1 ≥ 0,20 mm, de préférence E1 ≥ 0,50 mm et plus préférentiellement E1 ≥ 1,00 mm.

4. Pneumatique (10) selon l'une quelconque des revendications précédentes, dans lequel le ou au moins un des élément(s) filaire(s) de trame (42) comprend plusieurs monofilaments et/ou fibres textiles synthétiques polymériques organiques.

5. Pneumatique (10) selon l'une quelconque des revendications précédentes, dans lequel les monofilaments et les fibres synthétiques polymériques organiques sont choisi(e)s parmi les monofilaments et les fibres de polyester, les monofilaments et les fibres de polyamide, les monofilaments et les fibres de polycétone, les monofilaments et les fibres de polyuréthane, les monofilaments et les fibres d'acrylique, les monofilaments et les fibres de polyoléfine, les monofilaments et les fibres de polyétheréthercétone et les assemblages de ces monofilaments et de ces fibres, de préférence parmi les monofilaments et les fibres de polyester, les monofilaments et les fibres de polyamide et les assemblages de ces monofilaments et de ces fibres et plus préférentiellement les monofilaments et les fibres synthétiques organiques sont des monofilaments et des fibres de polyester.

6. Pneumatique (10) selon l'une quelconque des revendications précédentes, dans lequel, dans la partie axialement centrale (P0) du sommet (12), la distance radiale moyenne E2 entre :
- la surface radialement intérieure (104) passant par les points radialement les plus intérieurs des éléments de renfort filaires de frettage textiles (220) les plus radialement intérieurs parmi les éléments de renfort filaires de frettage textiles (220),
- la surface radialement extérieure (106) passant par les points radialement les plus extérieurs des éléments de renfort filaires de travail métalliques (260) de la couche de travail radialement la plus extérieure (26) de l'armature de travail (20),
est telle que E2 ≤ 0,40 mm, de préférence E2 ≤ 0,30 mm, plus préférentiellement E2 ≤ 0,20 mm.

7. Pneumatique (10) selon la revendication précédente, dans lequel E2 ≥ 0,05 mm, de préférence E2 ≥ 0,10 mm.

8. Pneumatique (10) selon l'une quelconque des revendications précédentes, dans lequel au moins un des éléments de renfort filaires de frettage textile (220) est au contact d'au moins un des éléments de renfort filaires de travail métalliques (260) de la couche de travail radialement la plus extérieure (26).

9. Pneumatique (10) selon l'une quelconque des revendications précédentes, dans lequel, dans la partie axialement centrale (P0) du sommet (12), la distance radiale moyenne H entre :
- la surface (100) passant par le point radialement le plus intérieur de la ou chaque découpure la plus profonde (74, 76) de la partie axialement centrale (P0) de la bande de roulement (14) et sensiblement parallèle à la surface de roulement (15), et
- la surface radialement extérieure (106) passant par les points radialement les plus extérieurs des éléments de renfort filaires de travail métalliques (260) de la couche de travail radialement la plus extérieure (26) de l'armature de travail (20),
est telle que H ≤ 3,00 mm, de préférence H ≤ 2,75 mm, plus préférentiellement H ≤ 2,50 mm et encore plus préférentiellement H ≤ 2,35 mm.

10. Pneumatique (10) selon l'une quelconque des revendications précédentes, dans lequel l'armature de frettage (22) est délimitée axialement par deux bords axiaux (221, 222) de l'armature de frettage (22) et comprend une bandelette (40) enroulée en hélice sur plusieurs tours circonférentiels (C1, C2, C3, C4, C5) de façon à s'étendre axialement entre les bords axiaux (221, 222) de l'armature de frettage (22).

11. Pneumatique (10) selon la revendication précédente, dans lequel la bandelette (40) est enroulée en hélice sur plusieurs tours circonférentiels (C1, C2, C3, C4, C5) de façon à ce que, dans la partie axialement centrale (P0) du sommet (12), deux tours circonférentiels (C1, C2, C3, C4, C5) adjacents de la bandelette (40) ne se recouvrent pas axialement et radialement l'un avec l'autre.

12. Pneumatique (10) selon la revendication 10 ou 11, dans lequel la bandelette (40) comprend plusieurs éléments de renfort filaires de frettage textiles (220) sensiblement parallèles les uns aux autres et noyés dans une matrice polymérique, de préférence une matrice élastomérique.

13. Pneumatique (10) selon l'une quelconque des revendications précédentes, dans lequel chaque élément de renfort filaire de frettage textile (220) s'étend selon une direction principale (D0) de frettage formant, avec la direction circonférentielle (X) du pneumatique (10), un angle, en valeur absolue, inférieur ou égal à 10°, de préférence inférieur ou égal à 7° et plus préférentiellement inférieur ou égal à 5°.

14. Pneumatique (10) selon la revendication précédente, dans lequel les éléments de renfort filaires de frettage textiles (220) sont reliés les uns aux autres par plusieurs éléments filaires de trame (42) sensiblement parallèles les uns aux autres selon une direction principale de trame (DT) non-colinéaire avec la direction principale de frettage (D0), les éléments filaires de trame (42) étant discontinus les uns avec les autres.

15. Pneumatique (10) selon la revendication 14, dans lequel la direction principale de trame (DT) forme un angle supérieur ou égal à 45°, de préférence supérieur ou égal à 75° avec la direction principale de frettage (D0).

## Patentansprüche

1. Reifen (10), der einen Scheitel (12) beinhaltet, der eine Lauffläche (14) beinhaltet, die eine Laufoberfläche (15) trägt, wobei der Scheitel (12) einen axial mittleren Teil (P0) beinhaltet, der sich über eine axiale Breite (L0) von 50 % der axialen Breite (L) der Laufoberfläche (15) erstreckt und axial auf die Medianebene (M) des Reifens (10) zentriert ist, wobei der axial mittlere Teil (P0) der Lauffläche (14) mindestens eine tiefste Aussparung (74, 76) des axial mittleren Teils (P0) der Lauffläche (14) beinhaltet,
wobei der Scheitel (12) eine Scheitelbewehrung (16) beinhaltet, die Folgendes beinhaltet:
- eine Arbeitsbewehrung (20), die mindestens eine radial am weitesten außen liegende Arbeitslage (26) der Arbeitsbewehrung (20) beinhaltet, wobei die radial am weitesten außen liegende Arbeitslage (26) metallische Arbeitsdrahtverstärkungselemente (260) beinhaltet,
- eine Umreifungsbewehrung (22), die mehrere textile Umreifungsdrahtverstärkungselemente (220) beinhaltet, die radial um die Arbeitsbewehrung (20) schraubenförmig gewickelt sind und durch ein oder mehrere Schussdrahtelemente (42) miteinander verbunden sind, wobei die Umreifungsbewehrung (22) zu der Arbeitsbewehrung (20) radial außen liegend und zu der Lauffläche (14) radial innen liegend angeordnet ist,
**dadurch gekennzeichnet, dass** in dem axial mittleren Teil (P0) des Scheitels (12) der mittlere radiale Abstand E1 zwischen:
- der Oberfläche (100), die durch den radial am weitesten innen liegenden Punkt der oder jeder tiefsten Aussparung (74, 76) des axial mittleren Teils (P0) der Lauffläche (14) verläuft und zu der Laufoberfläche (15) im Wesentlichen parallel ist, und
- der radial außen liegenden Oberfläche (102), die durch die radial am weitesten außen liegenden Punkte der radial am weitesten außen liegenden textilen Umreifungsdrahtverstärkungselemente (220) der textilen Umreifungsdrahtverstärkungselemente (220) verläuft,
derart ist, dass E1 ≤ 2,00 mm, und
dass das oder mindestens eines der Schussdrahtelemente (42) mehrere textile Monofilamente und/oder mehrere textile Fasern beinhaltet, die aus organischen polymeren synthetischen Monofilamenten und Fasern, anorganischen polymeren synthetischen Monofilamenten und Fasern und Anordnungen dieser Monofilamente und Fasern ausgewählt sind.

2. Reifen (10) nach dem vorhergehenden Anspruch, wobei E1 ≤ 1,80 mm, vorzugsweise E1 ≤ 1,50 mm, bevorzugter E1 ≤ 1,40 mm und noch bevorzugter E1 ≤ 1,20 mm.

3. Reifen (10) nach einem beliebigen der vorhergehenden Ansprüche, wobei E1 ≥ 0,20 mm, vorzugsweise E1 ≥ 0,50 mm und bevorzugter E1 ≥ 1,00 mm.

4. Reifen (10) nach einem beliebigen der vorhergehenden Ansprüche, wobei das oder mindestens eines der Schussdrahtelemente (42) mehrere organische polymere synthetische textile Monofilamente und/oder Fasern beinhaltet.

5. Reifen (10) nach einem beliebigen der vorhergehenden Ansprüche, wobei die organischen polymeren synthetischen Monofilamente und Fasern aus Polyestermonofilamenten und -fasern, Polyamidmonofilamenten und -fasern, Polyketonmonofilamenten und -fasern, Polyurethanmonofilamenten und -fasern, Acrylmonofilamenten und -fasern, Polyolefinmonofilamenten und -fasern, Polyetheretherketonmonofilamenten und -fasern und Anordnungen dieser Monofilamente und dieser Fasern, vorzugsweise aus Polyestermonofilamenten und -fasern, Polyamidmonofilamenten und -fasern und Anordnungen dieser Monofilamente und dieser Fasern ausgewählt sind, und wobei die organischen synthetischen Monofilamente und Fasern bevorzugter Polyestermonofilamente und -fasern sind.

6. Reifen (10) nach einem beliebigen der vorhergehenden Ansprüche, wobei in dem axial mittleren Teil (P0) des Scheitels (12) der mittlere radiale Abstand E2 zwischen:
- der radial innen liegenden Oberfläche (104), die durch die radial am weitesten innen liegenden Punkte der radial am weitesten innen liegenden textilen Umreifungsdrahtverstärkungselemente (220) der textilen Umreifungsdrahtverstärkungselemente (220) verläuft,
- der radial außen liegenden Oberfläche (106), die durch die radial am weitesten außen liegenden Punkte der metallischen Arbeitsdrahtverstärkungselemente (260) der radial am weitesten außen liegenden Arbeitslage (26) der Arbeitsbewehrung (20) verläuft,
derart ist, dass E2 ≤ 0,40 mm, vorzugsweise E2 ≤ 0,30 mm, bevorzugter E2 ≤ 0,20 mm.

7. Reifen (10) nach dem vorhergehenden Anspruch, wobei E2 ≥ 0,05 mm, vorzugsweise E2 ≥ 0,10 mm.

8. Reifen (10) nach einem beliebigen der vorhergehenden Ansprüche, wobei mindestens eines der textilen Umreifungsdrahtverstärkungselemente (220) mit mindestens einem der metallischen Arbeitsdrahtverstärkungselemente (260) der radial am weitesten außen liegenden Arbeitslage (26) in Kontakt ist.

9. Reifen (10) nach einem beliebigen der vorhergehenden Ansprüche, wobei in dem axial mittleren Teil (P0) des Scheitels (12) der mittlere radiale Abstand H zwischen:
- der Oberfläche (100), die durch den radial am weitesten innen liegenden Punkt der oder jeder tiefsten Aussparung (74, 76) des axial mittleren Teils (P0) der Lauffläche (14) verläuft und zu der Laufoberfläche (15) im Wesentlichen parallel ist, und
- der radial außen liegenden Oberfläche (106), die durch die radial am weitesten außen liegenden Punkte der metallischen Arbeitsdrahtverstärkungselemente (260) der radial am weitesten außen liegenden Arbeitslage (26) der Arbeitsbewehrung (20) verläuft,
derart ist, dass H ≤ 3,00 mm, vorzugsweise H ≤ 2,75 mm, bevorzugter H ≤ 2,50 mm und noch bevorzugter H ≤ 2,35 mm.

10. Reifen (10) nach einem beliebigen der vorhergehenden Ansprüche, wobei die Umreifungsbewehrung (22) durch zwei axiale Ränder (221, 222) der Umreifungsbewehrung (22) axial begrenzt wird und einen Streifen (40) beinhaltet, der über mehrere Umfangswindungen (C1, C2, C3, C4, C5) schraubenförmig gewickelt ist, um sich axial zwischen den axialen Rändern (221, 222) der Umreifungsbewehrung (22) zu erstrecken.

11. Reifen (10) nach dem vorhergehenden Anspruch, wobei der Streifen (40) so über mehrere Umfangswindungen (C1, C2, C3, C4, C5) schraubenförmig gewickelt ist, dass in dem axial mittleren Teil (P0) des Scheitels (12) zwei benachbarte Umfangswindungen (C1, C2, C3, C4, C5) des Streifens (40) einander nicht axial und radial überlagern.

12. Reifen (10) nach Anspruch 10 oder 11, wobei der Streifen (40) mehrere textile Umreifungsdrahtverstärkungselemente (220) beinhaltet, die im Wesentlichen parallel zueinander sind und in eine Polymermatrix, vorzugsweise eine Elastomermatrix, eingebettet sind.

13. Reifen (10) nach einem beliebigen der vorhergehenden Ansprüche, wobei sich jedes textile Umreifungsdrahtverstärkungselement (220) gemäß einer Umreifungshauptrichtung (D0) erstreckt, die mit der Umfangsrichtung (X) des Reifens (10) einen Winkel bildet, der als Absolutwert kleiner als oder gleich 10°, vorzugsweise kleiner als oder gleich 7° und bevorzugter kleiner als oder gleich 5° ist.

14. Reifen (10) nach dem vorhergehenden Anspruch, wobei die textilen Umreifungsdrahtverstärkungselemente (220) untereinander durch mehrere Schussdrahtelemente (42) verbunden sind, die zueinander gemäß einer Schusshauptrichtung (DT), die zu der Umreifungshauptrichtung (D0) nicht kollinear ist, im Wesentlichen parallel sind, wobei die Schussdrahtelemente (42) untereinander diskontinuierlich sind.

15. Reifen (10) nach Anspruch 14, wobei die Schusshauptrichtung (DT) mit der Umreifungshauptrichtung (D0) einen Winkel bildet, der größer als oder gleich 45°, vorzugsweise größer als oder gleich 75° ist.

## Claims

1. Tyre (10) comprising a crown (12) comprising a tread (14) bearing a tread surface (15), the crown (12) comprising an axially central portion (P0) extending over an axial width (L0) equal to 50% of the axial width (L) of the tread surface (15) and axially centred over the midplane (M) of the tyre (10), the axially central portion (P0) of the tread (14) comprising at least one deepest cut (74, 76) of the axially central portion (P0) of the tread (14),
the crown (12) comprising a crown reinforcement (16) comprising:
- a working reinforcement (20) comprising at least one radially outermost working layer (26) of the working reinforcement (20), the radially outermost working layer (26) comprising metal filamentary working reinforcing elements (260),
- a hoop reinforcement (22) comprising a plurality of textile filamentary hooping reinforcing elements (220) helically wound radially around the working reinforcement (20) and connected to one another by one or more filamentary weft element(s) (42), the hoop reinforcement (22) being arranged radially outside the working reinforcement (20) and radially inside the tread (14),
**characterized in that,** in the axially central portion (P0) of the crown (12), the mean radial distance E1 between:
- the surface (100) that passes through the radially innermost point of the or each deepest cut (74, 76) of the axially central portion (P0) of the tread (14) and substantially parallel to the tread surface (15) and
- the radially outer surface (102) that passes through the radially outermost points of the textile filamentary hooping reinforcing elements (220) that are radially outermost among the textile filamentary hooping reinforcing elements (220),
is such that E1 ≤ 2.00 mm, and
**in that** the or at least one of the filamentary weft element(s) (42) comprises a plurality of textile monofilaments and/or a plurality of textile fibres selected from organic polymeric synthetic fibres and monofilaments, inorganic polymeric synthetic fibres and monofilaments, and assemblies of these monofilaments and fibres.

2. Tyre (10) according to the preceding claim, wherein E1 ≤ 1.80 mm, preferably E1 ≤ 1.50 mm, more preferentially E1 ≤ 1.40 mm and even more preferentially E1 ≤ 1.20 mm.

3. Tyre (10) according to either one of the preceding claims, wherein E1 ≥ 0.20 mm, preferably E1 ≥ 0.50 mm and more preferentially E1 ≥ 1.00 mm.

4. Tyre (10) according to any one of the preceding claims, wherein the or at least one of the filamentary weft element(s) (42) comprises a plurality of organic polymeric synthetic textile fibres and/or monofilaments.

5. Tyre (10) according to any one of the preceding claims, wherein the organic polymeric synthetic fibres and monofilaments are selected from polyester fibres and monofilaments, polyamide fibres and monofilaments, polyketone fibres and monofilaments, polyurethane fibres and monofilaments, acrylic fibres and monofilaments, polyolefin fibres and monofilaments, polyether ether ketone fibres and monofilaments and assemblies of these monofilaments and of these fibres, preferably from polyester fibres and monofilaments, polyamide fibres and monofilaments and assemblies of these monofilaments and of these fibres, and more preferentially the organic synthetic fibres and monofilaments are polyester fibres and monofilaments.

6. Tyre (10) according to any one of the preceding claims, wherein, in the axially central portion (P0) of the crown (12), the mean radial distance E2 between:
- the radially inner surface (104) that passes through the radially innermost points of the textile filamentary hooping reinforcing elements (220) that are radially innermost among the textile filamentary hooping reinforcing elements (220),
- the radially outer surface (106) that passes through the radially outermost points of the metal filamentary working reinforcing elements (260) of the radially outermost working layer (26) of the working reinforcement (20),
is such that E2 ≤ 0.40 mm, preferably E2 ≤ 0.30 mm, more preferentially E2 ≤ 0.20 mm.

7. Tyre (10) according to the preceding claim, wherein E2 ≥ 0.05 mm, preferably E2 ≥ 0.10 mm.

8. Tyre (10) according to any one of the preceding claims, wherein at least one of the textile filamentary hooping reinforcing elements (220) is in contact with at least one of the metal filamentary working reinforcing elements (260) of the radially outermost working layer (26).

9. Tyre (10) according to any one of the preceding claims, wherein, in the axially central portion (P0) of the crown (12), the mean radial distance H between:
- the surface (100) that passes through the radially innermost point of the or each deepest cut (74, 76) of the axially central portion (P0) of the tread (14) and substantially parallel to the tread surface (15) and
- the radially outer surface (106) that passes through the radially outermost points of the metal filamentary working reinforcing elements (260) of the radially outermost working layer (26) of the working reinforcement (20),
is such that H ≤ 3.00 mm, preferably H ≤ 2.75 mm, more preferentially H ≤ 2.50 mm and even more preferentially H ≤ 2.35 mm.

10. Tyre (10) according to any one of the preceding claims, wherein the hoop reinforcement (22) is axially delimited by two axial edges (221, 222) of the hoop reinforcement (22) and comprises a strip (40) helically wound over a plurality of circumferential turns (C1, C2, C3, C4, C5) so as to extend axially between the axial edges (221, 222) of the hoop reinforcement (22).

11. Tyre (10) according to the preceding claim, wherein the strip (40) is helically wound over a plurality of circumferential turns (C1, C2, C3, C4, C5) such that, in the axially central portion (P0) of the crown (12), two adjacent circumferential turns (C1, C2, C3, C4, C5) of the strip (40) do not overlap axially and radially with one another.

12. Tyre (10) according to Claim 10 or 11, wherein the strip (40) comprises a plurality of textile filamentary hooping reinforcing elements (220) that are substantially parallel to one another and are embedded in a polymer matrix, preferably an elastomer matrix.

13. Tyre (10) according to any one of the preceding claims, wherein each textile filamentary hooping reinforcing element (220) extends in a main hooping direction (D0) forming an angle which, in terms of absolute value, is less than or equal than 10°, preferably less than or equal to 7° and more preferentially less than or equal to 5° with the circumferential direction (X) of the tyre.

14. Tyre (10) according to the preceding claim, wherein the textile filamentary hooping reinforcing elements (220) are connected to one another by a plurality of filamentary weft elements (42) that are substantially parallel to one another in a main weft direction (DT) that is not colinear with the main hooping direction (D0), the filamentary weft elements (42) being discontinuous with one another.

15. Tyre (10) according to Claim 14, wherein the main weft direction (DT) forms an angle of greater than or equal to 45°, preferably greater than or equal to 75° with the main hooping direction (D0).
